# EUROPEAN PATENT APPLICATION

(11) **EP 0 917 089 A2**
(43) Date of publication of application: **19.05.1999**
(21) Application number: 98121180.8
(22) Date of filing: 13.11.1998
(51) Int. Cl.: G06K 9/64

(54) **Apparatus and method for image recognition**

(30) Priority: 13.11.1997 JP 312510/97
(71) Applicant: FUJI XEROX CO., LTD., Minato-ku, Tokyo (JP)
(72) Inventor: Hayashi, Terutake, Ebina-shi, Kanagawa (JP); Awata, Yoshinori, Ebina-shi, Kanagawa (JP); Sugiyama, Takeyasu, Ebina-shi, Kanagawa (JP); Takahashi, Kenichi, Ebina-shi, Kanagawa (JP); Fukazawa, Kazumi, Ebina-shi, Kanagawa (JP); Akamatsu, Manabu, Ebina-shi, Kanagawa (JP); Fusatani, Akihiko, Ebina-shi, Kanagawa (JP)
(74) Representative: Boeters, Hans Dietrich, Dr.

(57) **Abstract**

An image recognition method recognizes a plurality of images to be recognized including at least one of a specific image and images provided by rotating the specific image from an input image. The method includes the steps of: preparing a reference one-dimensional data string having a plurality of pixel values for each image to be recognized, said reference one-dimensional data string being provided by arranging said pixel values on a predetermined liner-shaped figure on a window area in an order, said window area having a size including the specific image and being structured by cells; first setting said window area on the input image; second setting said figure on said window area set on the input image; comparing a one-dimensional data string having a plurality of pixel values for the input image with said reference one-dimensional data string, said one-dimensional data string being provided by arranging said pixel value on said figure on said window area in the order; and determining whether or not the specific image exists based on the comparison result at said comparing step.

## Description

### BACKGROUND OF THE INVENTION

### 1. Field of the Invention

This invention relates to an image recognition method and an image recognition apparatus for recognizing a specific image of a figure, text, a symbol, etc., from an input image, and a recording medium recording a program for accomplishing image recognition by the image recognition method.

### 2. Description of the Related Art

A template matching method is available as a conventional method of recognizing a specific image from an input image. A general template matching method is as follows: An image to be recognized is provided as a reference image, an input image is superposed on the reference image and a comparison is made between the images while the images are slid by one pixel at a time horizontally or vertically. If all the pixels or a given number of pixels or more match, it is determined that the image is the image to be recognized. However, this method has the disadvantage in that if the image to be recognized is changed in orientation (rotated) and then input, it cannot be recognized.

As a method for solving the problem, a method of generating the coordinates applied when a reference pattern stored in memory is rotated and performing template matching at various angles is proposed, as disclosed in Japanese Patent Laid-Open No. Hei 5-12446. Also proposed are a method of detecting the center of gravity of an image and converting into polar coordinate data with the center of gravity as the center to handle rotated images, as described in Japanese Patent Laid-Open No. Hei 8-63604, a method of applying Fourier transform to a light and dark pixel data string on a circular window to find a spectrum pattern and comparing the spectrum pattern with a spectrum pattern of a reference image to handle rotated images, as described in Japanese Patent Laid-Open No. Hei 6-309461, and a method of applying outer peripheral data in a figure of square and comparing with an input data, as described in Japanese Patent Laid-Open No. Hei 9-18707.

However, in the conventional methods, complicated operations must be performed as described above and high-speed processing cannot be carried out. If each of the above-described methods is realized in circuitry, the circuit configuration becomes large-scaled and complicated.

Further, in recent years, a system of previously embedding a specific pattern such as two-dimensional code in a literary work, an important document, securities, etc., and recognizing the pattern, thereby realizing advanced document management, preventing illegal use (for example, literary work copy without permission), etc.,; they look forward to an art for enabling a specific image to be recognized at higher speed than the general pattern matching method.

### SUMMARY OF THE INVENTION

It is therefore an object of the invention to provide an image recognition method and an image recognition apparatus applicable to recognition of every image and capable of recognizing a specific image at high speed in a simple configuration, and a recording medium recording a program for accomplishing the image recognition according to the image recognition method.

To the end, according to a first aspect of the invention, there is provided an image recognition method of recognizing a plurality of images from an input image, the plurality of images to be recognized including at least one of a specific image and images provided by rotating the specific image, the method comprising the steps of: preparing a reference one-dimensional data string having a pixel value for each image to be recognized, the reference one-dimensional data string being provided by arranging the pixel values on a predetermined liner-shaped figure on a window area in an order, the window area having a size including the specific image and being structured by cells; first setting said window area on the input image; second setting said figure on the window area set on the input image; comparing a one-dimensional data string having a pixel value for the input image with the reference one-dimensional data string, the one-dimensional data string being provided by arranging the pixel values on the figure on the window area in the order; and determining whether or not the specific image exists based on the comparison result at the comparing step.

That is, any specific image can be recognized only by performing simple processing of comparing the one-dimensional data string extracted from a part on the window area with the reference one-dimensional data string.

Further, the figure may be a figure having a figure provided by rotating that figure and completely overlapping the figure, the figure may be set on the window area so that the rotation center of the figure matches the rotation center of the specific figure, a reference position may be set on the figure, the order may be the order starting at the reference position, and the comparison may be made while the one-dimensional data string and the reference one-dimensional data string are shifted relatively and cyclically. In this case, the cyclic shifting of the one-dimensional data string becomes equivalent to image rotation, thus not only the specific image, but also the images provided by rotating the specific image can be recognized. In addition, a plurality of the figures may be provided. Specifically, whether or not the specific image exists may be determined based on the relative relationship between the shift amounts from each reference position when the comparison result at the comparing step for each figure satisfies a predetermined condition, or while cyclically shifting the one-dimensional data string corresponding to any one of the figures, the one-dimensional data string may be compared with the reference one-dimensional data string corresponding thereto, each of the one-dimensional data strings corresponding to the figures other than that figure and each of the reference one-dimensional data strings may be relatively and cyclically shifted based on the shift amount from the reference position when the comparison result satisfies a predetermined condition, and a comparison may be made therebetween, then whether or not the specific image exists may be determined based on the comparison results.

The number of pixels each having a predetermined value may be found in a preset area in the window area set at the first setting step and the number of pixels may be compared with a predetermined number, then whether or not the specific image exists may be determined based on the comparison result and the comparison result at the comparing step. In this case, the recognition accuracy is more improved. In addition, the preset area may be an area on the line of the figure for simplifying the processing.

Relevant information to the specific image may be input and whether or not the specific image exists may be determined by adding the relevant information. In this case, the recognition accuracy is more improved.

Further, the values of a plurality of pixels positioned on the line of the figure may be corrected based on the values of the peripheral pixels, and a one-dimensional data string comprising the corrected values of the pixels arranged in the order may be compared with the reference one-dimensional data string. In this case, an error caused by the binarization algorithm, image resolution, etc., is absorbed and the recognition accuracy is more improved.

According to a second aspect of the invention, there is provided an image recognition apparatus of recognizing a plurality of images from an input image, the plurality of images to be recognized including at least one of a specific image and images provided by rotating the specific image, the apparatus comprising: image input means for inputting the input image; storage means for storing a reference one-dimensional data string having a pixel value for each image to be recognized, the reference one-dimensional data string being provided by arranging the pixel values on a predetermined liner-shaped figure on a window area in an order, the window area having a size including the specific image and being structured by cells; window setting means for setting the window area on the input image input through the image input means; figure setting means for setting the figure on the window area set by the window setting means; comparison means for comparing a one-dimensional data string having a pixel value for the input image with the reference one-dimensional data string, the one-dimensional data string being provided by arranging the pixel values on the figure on the window area in the order; and recognition determination means for determining whether or not the specific image exists based on the comparison result of the comparison means.

That is, any specific image can be recognized only by performing simple processing of comparing the one-dimensional data string extracted from a part on the window area with the reference one-dimensional data string.

Further, the figure may be a figure having a figure provided by rotating that figure and completely overlapping the figure, the figure setting means may set the figure on the window area so that the rotation center of the figure matches the rotation center of the specific figure, and set a reference position on the line of the figure, the order may be an order starting at the reference position, and the comparison means may compare the one-dimensional data string with the reference one-dimensional data string while cyclically shifting the one-dimensional data string. In this case, the cyclic shifting of the one-dimensional data string becomes equivalent to image rotation, thus not only the specific image, but also the images provided by rotating the specific image can be recognized. In addition, a plurality of the figures may be provided. Specifically, the comparison means may compare the one-dimensional data string with the reference one-dimensional data string separately for each of the figures, and if each comparison result of the comparison means satisfies a predetermined condition, the recognition determination means may determine whether or not the specific image exists based on the relative relationship between shift amounts when the comparison results are provided, or based on the shift amount from the reference position when the comparison result for any one of the figures satisfies a predetermined condition, the comparison means may cyclically shift each one-dimensional data string corresponding to another figure. In the latter case, the comparison means may give the shift amount from the reference position when the comparison result satisfies the predetermined condition to the barrel shifter for cyclically shifting each one-dimensional data string at a time. In this case, the time required for the shifting is shortened.

The storage means may store a plurality of reference one-dimensional data strings each comprising the values of a plurality of pixels positioned on the figure arranged in the order for a plurality of the specific images, and, for example, the comparison means may select any one of the reference one-dimensional data strings stored in the storage means and compare the selected reference one-dimensional data string with the one-dimensional data string, or the comparison means may compare the one-dimensional data string with the reference one-dimensional data strings and the recognition determination means may determine whether or not the specific images exist in the input image based on the comparison results of the comparison means. In either case, a plurality of the specific images can be recognized. Particularly, if they are a specific image and the images provided by rotating the specific image, a figure not resistant to rotation can be used to recognize the images provided by rotating the specific image. Moreover, in the latter, a plurality of the specific images can be recognized in parallel.

The image recognition apparatus may further include number-of-pixels calculation means for finding the number of pixels each having a predetermined value in a preset area in the window area set by the window setting means, and number-of-pixels comparison means for comparing the number of pixels found by the number-of-pixels calculation means with a predetermined number. The recognition determination means may determine whether or not the specific image exists based on the comparison results of the comparison means and the number-of-pixels comparison means. In this case, the recognition accuracy is more improved. In addition, the preset area may be an area on the line of the figure for simplifying the processing.

Whether or not the specific image exists may be determined by adding the relevant information to the specific image. In this case, the recognition accuracy is more improved.

The image recognition apparatus may further include correction means for correcting the values of a plurality of pixels positioned on the line of the figure set by the figure setting means based on the values of peripheral pixels. The comparison means may compare a one-dimensional data string comprising the values of the pixels corrected by the correction means arranged in the order with the reference one-dimensional data string. In this case, an error caused by the binarization algorithm, image resolution, etc., is absorbed and the recognition accuracy is more improved.

The figure may be a closed figure for simplifying the cyclic shift processing.

The window area may be rectangular so that input images which generally become often rectangular can be scanned without wasting, or the window area may be circular for minimizing the window area.

According to a third aspect of the invention, there is provided A recording medium recording a program of recognizing a plurality of images ford an input image, the plurality of images to be recognized including at least one of a specific image and images provided by rotating the specific image, the program comprising the steps of: loading a reference one-dimensional data string having a pixel value for each image to be recognized, the reference one-dimensional data string being provided by arranging the pixel values on a predetermined liner-shaped figure on a window area in an order, the window area having a size including the specific image and being structured by cells; first setting the window area on the input image; second setting the figure on the window area set on the input image; comparing a one-dimensional data string having a pixel value for the input image with the reference one-dimensional data string, the one-dimensional data string being provided by arranging the pixel values on the figure on the window area in the order; and determining whether or not the specific image exists based on the comparison result at the comparing step.

In this case, the program is read and executed by a computer system, whereby any specific image can be recognized only by performing simple processing of comparing the one-dimensional data string extracted from a part on the window area with the reference one-dimensional data string.

### BRIEF DESCRIPTION OF THE DRAWINGS

In the accompanying drawings:
FIG. 1 is a flowchart to show recognition processing in an image recognition apparatus according to one embodiment of the invention;
FIG. 2A and 2B are illustrations to show an example of a specific image recognized in the image recognition apparatus according to the embodiment of the invention and an example of a two-dimensional figure required for recognition processing in correspondence therebetween;
FIG. 3 is an illustration to describe reference positions in the image recognition apparatus according to the embodiment of the invention;
FIG. 4 is an illustration to show an image of reference one-dimensional data string examples in the image recognition apparatus according to the embodiment of the invention;
FIG. 5 is a block diagram to the configuration of the image recognition apparatus according to the embodiment of the invention;
FIG. 6 is a diagram to show a configuration example of the image input section 1 and a partial configuration example of the window generation section 2 of the image recognition apparatus according to the embodiment of the invention;
FIG. 7 is an illustration to conceptually show the relationship between the window area and one-dimensional areas in the image recognition apparatus according to the embodiment of the invention;
FIG. 8 is an illustration to show an image where the window area and one-dimensional areas are set on the image shown in FIG. 2A by the image recognition apparatus according to the embodiment of the invention;
FIG. 9A-9D are illustrations to show how the one-dimensional areas change as the image rotation angle changes from 0 degrees to 90 degrees to 180 degrees to 270 degrees in the image recognition apparatus according to the embodiment of the invention;
FIG. 10 is an illustration to describe the specific configurations of a one-dimensional area setting section 3, a one-dimensional area determination section 4, and a one-dimensional area dictionary 5 of the image recognition apparatus according to the embodiment of the invention;
FIG. 11 is a diagram to show a configuration example of a one-dimensional area determination section 6 of the image recognition apparatus according to the embodiment of the invention;
FIG. 12 is a diagram to show actual placement of the one-dimensional area setting section, the one-dimensional area determination section, the one-dimensional area dictionary, and the recognition determination section of the image recognition apparatus according to the embodiment of the invention;
FIG. 13A-13D are illustrations to show specific image examples in the image recognition apparatus according to the embodiment of the invention;
FIG. 14 is an illustration to show a window area example in the image recognition apparatus according to the embodiment of the invention;
FIG. 15 is an illustration to show one-dimensional area examples in the image recognition apparatus according to the embodiment of the invention;
FIG. 16 is a block diagram to show a configuration example of applying the image recognition apparatus according to the embodiment of the invention to a color copier;
FIG. 17 is a block diagram to show a configuration example of applying the image recognition apparatus according to the embodiment of the invention to a scanner;
FIG. 18 is a block diagram to show a configuration example of applying the image recognition apparatus according to the embodiment of the invention to a handy pattern detector;
FIG. 19 is a block diagram to show a configuration example of applying the image recognition apparatus according to the embodiment of the invention to a printer;
FIG. 20 is a flowchart to show specific image registration processing in the image recognition apparatus according to the embodiment of the invention;
FIG. 21 is a flowchart to show specific image recognition processing in the image recognition apparatus according to the embodiment of the invention;
FIG. 22 is an illustration to show the relationship between a window area and an input image at the scanning time in the image recognition apparatus according to the embodiment of the invention;
FIG. 23 is an illustration to show an example of an image existing in the window area in recognition processing of the image recognition apparatus according to the embodiment of the invention;
FIG. 24A is an illustration to show the configuration of the one-dimensional area setting section 3 of the image recognition apparatus according to the embodiment of the invention and FIG. 24B is an illustration to show output examples of one-dimensional area setting sections 3A, 3B, 3C, and 3D for the image shown in FIG. 23;
FIG. 25 is an illustration to show an example of an image existing in the window area in recognition processing of the image recognition apparatus according to the embodiment of the invention;
FIG. 26 is an illustration to show output examples of the one-dimensional area setting sections 3A, 3B, 3C, and 3D for the image shown in FIG. 25;
FIG. 27 is an illustration to show an example of an image existing in the window area in recognition processing of the image recognition apparatus according to the embodiment of the invention;
FIG. 28 is an illustration to show output examples of the one-dimensional area setting sections 3A, 3B, 3C, and 3D for the image shown in FIG. 27;
FIG. 29A and 29B are illustrations to show examples of images existing in the window area in recognition processing of the image recognition apparatus according to the embodiment of the invention;
FIG. 30 is a chart to describe recognition processing cycles for each window area in the image recognition apparatus according to the embodiment of the invention;
FIG. 31 is a chart to show processing cycles applied for performing processing for the one-dimensional areas in parallel in the image recognition apparatus according to the embodiment of the invention;
FIG. 32A and 32B are illustrations to show an example of a specific image recognized in the image recognition apparatus according to the embodiment of the invention and an example of a two-dimensional figure required for recognition processing in correspondence therebetween;
FIG. 33A-33D are illustrations to show examples of two-dimensional figures required for recognition processing of the image recognition apparatus according to the embodiment of the invention;
FIG. 34A and 34B are illustrations to show an example of a specific image recognized in the image recognition apparatus according to the embodiment of the invention and an example of a two-dimensional figure required for recognition processing in correspondence therebetween;
FIG. 35 is a diagram to show a configuration example of a barrel shifter that can accomplish cyclic shift in the image recognition apparatus according to the embodiment of the invention;
FIG. 36 is a flowchart to show image recognition processing realized by a first modified embodiment of the image recognition apparatus according to the embodiment of the invention;
FIG. 37A-37C are illustrations to describe the operation of the first modified embodiment;
FIG. 38 is a block diagram to show the configuration of the first modified embodiment;
FIG. 39 is an illustration to describe a configuration example of an in-area pixel calculation section 7 in the first modified embodiment;
FIG. 40A and 40B are illustrations to show area setting examples different from the area setting shown in FIG. 37A-37C;
FIG. 41 is a flowchart to show image recognition processing realized by a second modified embodiment of the image recognition apparatus according to the embodiment of the invention;
FIG. 42 is a block diagram to show the configuration of the second modified embodiment;
FIG. 43 is an illustration to describe a configuration example of an on-one-dimensional-area pixel calculation section 9 in the second modified embodiment;
FIG. 44 is a flowchart to show image recognition processing realized by a third modified embodiment of the image recognition apparatus according to the embodiment of the invention;
FIG. 45 is a block diagram to show the configuration of the third modified embodiment;
FIG. 46 is a block diagram to show an example of a system for extracting the peripheral information and feature of a specific image; and
FIG. 47A and 47B are illustrations to describe a method for reflecting the peripheral information and feature of a specific image on a one-dimensional data string.

### DETAILED DESCRIPTION OF THE PREFERRED EMBODIMENTS

Referring now to the accompanying drawings, there is shown an image recognition apparatus according to one embodiment of the invention.

### (1) Image recognition method

First, an image recognition method provided by the image recognition apparatus will be discussed.

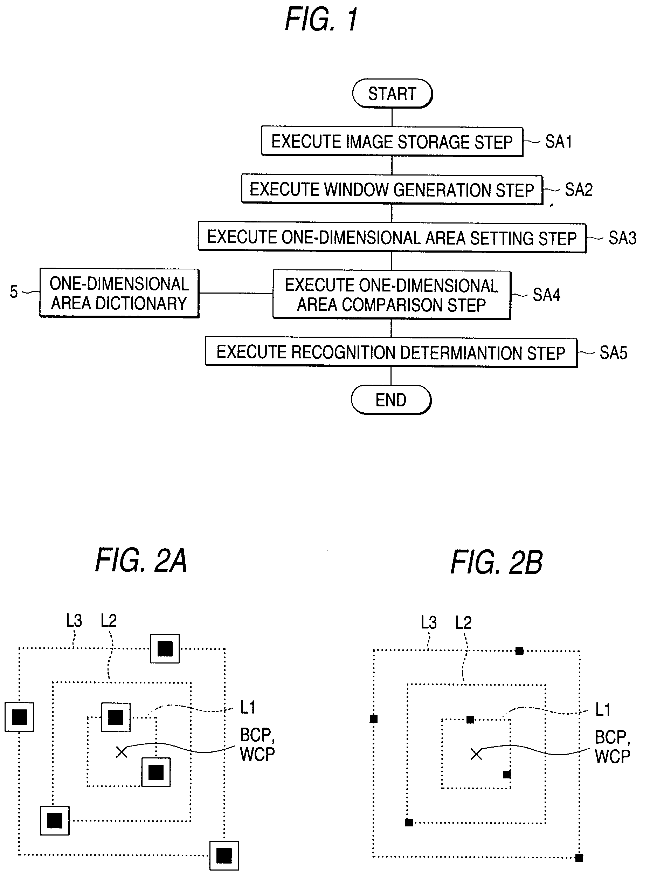

FIG. 1 is a flowchart to show a flow of recognition processing according to the image recognition method. The recognition processing shown here is repeated for an input image completely, whereby specific image recognition processing is completed. The principle of recognition processing in the image recognition apparatus will be discussed before a specific processing flow will be discussed.

### (1-1) Basic principle

Basically, the image recognition apparatus registers reference one-dimensional data strings representing the features of a specific image to be recognized and a plurality of images to be recognized, provided by rotating the specific image clockwise at rotation angles 0 degrees, 90 degrees, 180 degrees, and 270 degrees and compares the reference one-dimensional data strings with one-dimensional data strings provided from an input image for recognizing the specific image. Assuming that the specific image is the image shown in FIG. 2A, the principle of recognition processing will be discussed. The image shown in FIG. 2B is an image provided by binarizing the original image shown in FIG. 2A at a predetermined resolution by a proper technique and each of six feature areas represented by black shaded squares is formed of one pixel. Of course, each feature area may be made up of a number of pixels depending on the image.

As seen from the description made so far, in fact, the image recognition apparatus handles the image shown in FIG. 2B as the specific image; here, for convenience of the description, the image shown in FIG. 2A is also handled as the specific image.

To provide reference one-dimensional data strings representing the feature of a specific image, first a two-dimensional figure is superposed on the specific image as shown in FIG. 2A and 2B. In FIG. 2A and 2B, the two-dimensional figure superposed on the specific image is a figure comprising closed square figures L1-L3 different in the length of one side placed with the center points matched. The reason why the center points of the closed figures L1-L3 are matched is that not only the specific image, but also the images provided by rotating the specific image are handled as the images to be recognized; a more detailed reason will be made clear later.

The two-dimensional figure is superposed on the specific image so that center point BCP of rotation of the specific image is matched with center point WCP of the two-dimensional figure, as shown in FIG. 2A and 2B. The center point BCP of rotation of the specific image can be set as desired. However, to avoid an increase in processing and upsizing of the apparatus, the area of the two-dimensional figure (namely, the area of the closed figure L3) should be suppressed, thus it is desirable to set the center point BCP so that the longest distance to the periphery of the specific figure becomes the shortest.

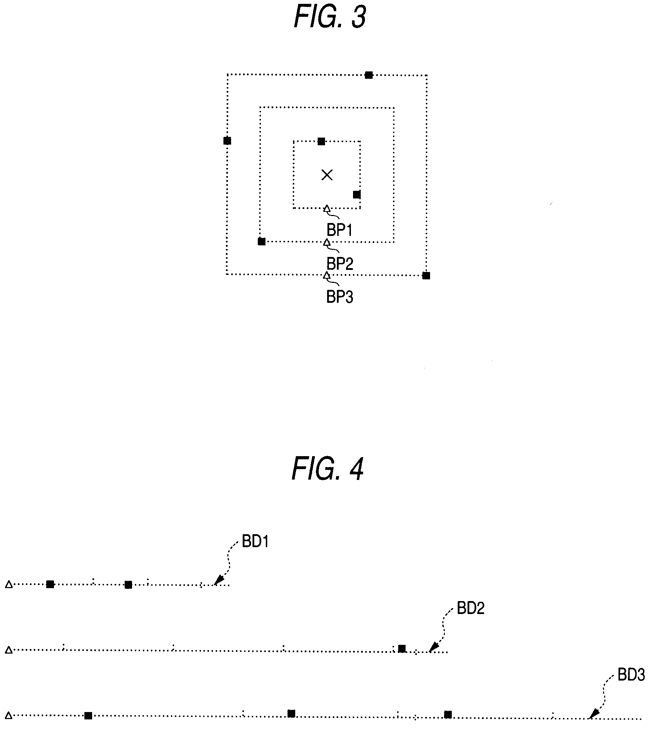

Next, as shown in FIG. 3, reference positions BP1-BP3 are set on the peripheries of the closed figures L1-L3 and strings of pixel values (for example, '0,' '1') provided in order by scanning on the closed figures L1-L3 in a predetermined direction (for example, counterclockwise) from the reference positions are set to reference one-dimensional data strings BD1-BD3 for the closed figures L1-L3 and stored in a one-dimensional area dictionary (storage means) in correspondence with the numbers of pixels by which the reference positions BP1-BP3 shift on the corresponding reference one-dimensional data strings BD1-BD3 when the closed figures L1-L3 are rotated 90 degrees, which will be hereinafter referred to as shift amounts, and the reference positions BP1-BP3. The reference one-dimensional data strings BD1-BD3 are imaged as shown in FIG. 4. In FIG. 4, marks representing the reference positions and the corners of the closed figures L1-L3 are entered, but information corresponding to the marks is not contained in the actual reference one-dimensional data strings. If the scanning directions for providing the reference one-dimensional data strings BD1-BD3 are also stored in the one-dimensional area dictionary, it is not necessary to make the scanning directions for the closed figures L1-L3 common.

The subsequent processing is applied to the input image.

First, an image of the size corresponding to the two-dimensional figure is extracted from the input image and similar processing to that described above is performed for the extracted image for finding the one-dimensional data strings for the closed figures L1-L3. At this time, the reference positions indicating the start points of the one-dimensional data strings are the reference positions BP1-BP3 stored in the one-dimensional area dictionary. Therefore, if the one-dimensional data strings found for the input image match the reference one-dimensional data strings BD1-BD3, the specific image itself is detected. If the one-dimensional data strings found for the input image or the reference one-dimensional data strings BD1-BD3 are shifted cyclically by an amount equivalent to an integral multiple of the shift amount and then the corresponding one-dimensional data strings match, an image provided by rotating the specific image is detected. In either case, the image to be recognized is detected and therefore it can be determined that the specific image is recognized.

### (1-2) Image recognition method

Next, the image recognition method based on the above-described principle is outlined with reference to FIG. 1.

In the image recognition method, first an image of a size to allow a window area to be set is extracted from an input image at step SA1 (image storage step). The window area mentioned here refers to a square area in which two-dimensional figures, for example, shown in FIG. 2A and 2B, are set. In the method, the center points of the window area and the two-dimensional figures match.

Next, at step SA2 (window generation step), the window area is set on the image extracted at step SA1, and further at step SA3 (one-dimensional area setting step), one-dimensional areas corresponding to closed figures are set on the window area, whereby the values of pixels in each one-dimensional area are extracted from the image in the window area and one-dimensional data strings with preset reference positions as start points are gotten.

Next, at step SA4 (one-dimensional area comparison step), reference one-dimensional data strings preset in a one-dimensional area dictionary 5 are compared with the one-dimensional data strings gotten at step SA3 by cyclically shifting the reference one-dimensional data strings or the gotten one-dimensional data strings in sequence by amounts corresponding to the rotation angles of 0 degrees, 90 degrees, 180 degrees, and 270 degrees. Next, at step SA5 (recognition determination step), whether or not the specific image is recognized is determined based on the comparison result at step SA4.

The specific processing contents according to the image recognition method will be discussed later with the operation of the image recognition apparatus.

### (2) Configuration

Next, the configuration of the image recognition apparatus will be discussed.

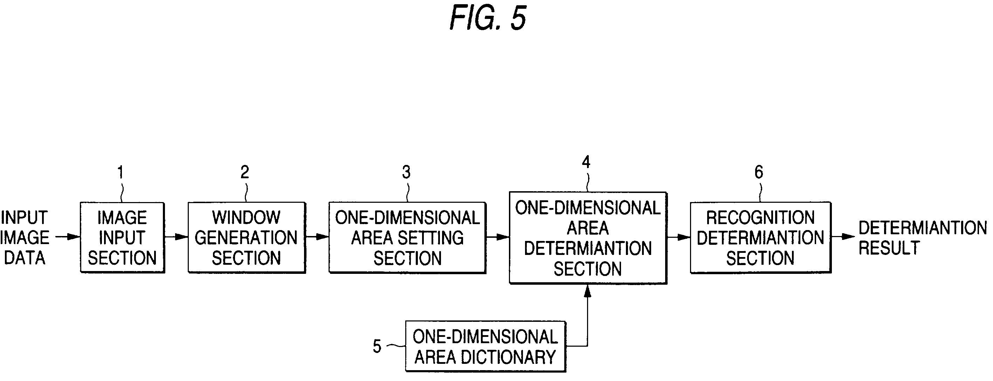

FIG. 5 is a basic block diagram to the configuration of the image recognition apparatus. This image recognition apparatus inputs binary input image data and outputs the determination result as to whether or not a specific image is recognized in the input image represented by the input image data. However, it adopts a specific image and a number of images provided by rotating the specific image as the images to be recognized and if any of the images to be recognized exists in the input image, determines that the specific image is recognized. If the input image is an image with multivalued pixel darkness, such as a color or gray-scale image, the multivalued input image data is binarized properly at the stage preceding the configuration shown in FIG. 5, whereby binary input image data can be provided.

In FIG. 5, numeral 1 is an image input section (image input means) for storing input image data of the most recent lines of input image data fed in sequence from the outside. Numeral 2 is a window generation section (window setting means) for scanning the input image data of lines stored in the image input section 1 in a window area of a preset size. The window generation section 2 extracts the image data in the window area while shifting the position of the window area relative to the image represented by the input image data by one pixel at a time in the line direction.

Numeral 3 is a one-dimensional area setting section (figure setting means) for extracting one-dimensional data strings from the image data extracted by the window generation section 2 based on reference positions on the window area and a preset two-dimensional figure. Numeral 4 is a one-dimensional area determination section (comparison means) for comparing the one-dimensional data strings extracted by the one-dimensional area setting section 3 with reference one-dimensional data strings stored in one-dimensional area dictionary 5 and determining whether or not they match. Numeral 6 is a recognition determination section (recognition determination means) for determining whether or not the specific image is recognized based on the determination result of the one-dimensional area determination section 4.

### (3) Configurations of the sections

Next, the configurations of the sections of the image recognition apparatus will be discussed. Here, for easy-to-understand description, assume that the resolution of each image to be recognized is 16 [dots/mm], namely, 400 [dpi], that input image data is color data with each color (R, G, B) having 256-level gray scale (8-bit color data for each color), that the specific image is the image shown in FIG. 2A, and that each feature area pixel has darkness of R=200, G=50, B=50.

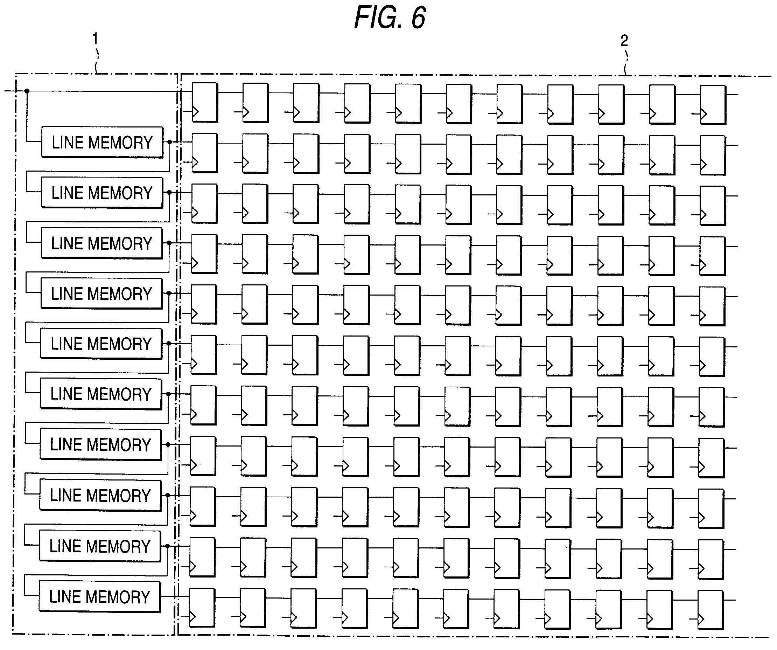

FIG. 6 is a diagram to show a configuration example of the image input section 1 and a partial configuration example of the window generation section 2, wherein the image input section 1 comprises 11 line memories connected in series and having output fed into the window generation section 2. Each of the line memories can store 1-line input image data and the image input section 1 has as many line memories as [number of rows of window area set by window generation section 2] minus 1 or more. The line memory storage capacity should be designed appropriately; for example, to apply the image recognition apparatus to a copier capable of copying an A4-size original, the length of the A4 size is about 300 mm and therefore, 16 [dots/mm] X 300 [mm] = 4800 [dots] and the depth capacity of about 5 kilowords is required for the line memory capacity.

By configuring the image input section 1 as shown in FIG. 6, the input image data is through-output and stored in the top line memory in FIG. 6 and the input image data output from each line memory is stored in the just downward line memory. Since the input image data output from the line memories is also fed into the window generation section 2, the image input section 1 is configured so that the number of output channels from the image input section 1 becomes equal to or greater than the number of rows of the window area. The window area is made up of unit areas called cells and the number of rows of the window area means the number of vertical cells.

In the example shown in FIG. 6, it is assumed that the maximum number of rows of the window area is 11, and the image input section 1 is configured so as to be able to output on 11 channels in parallel. Thus, for example, when the input image data corresponding to the top pixel of the eleventh line, it is fed into the window generation section 2 as it is, and the input image data corresponding to the top pixel of the tenth line, the input image data corresponding to the top pixel of the ninth line, ..., the input image data corresponding to the top pixel of the first line are output from the line memories.

In the example shown in FIG. 6, the window generation section 2 comprises 11 channels each having a flip-flop group comprising 11 flip-flops connected in series, and the top flip-flop of each channel inputs the output of each of the 11 channels from the image input section 1. That is, the flip-flop groups shown in FIG. 6 correspond to a 11 X 11 square window area and inputting of image data to the flip-flops is equivalent to "setting of a 11 X 11 window area." The window generation section 2 comprises means for enabling other sections to use the values stored in the flip-flops and can deal with a window area of any shape of 11 X 11 or less.

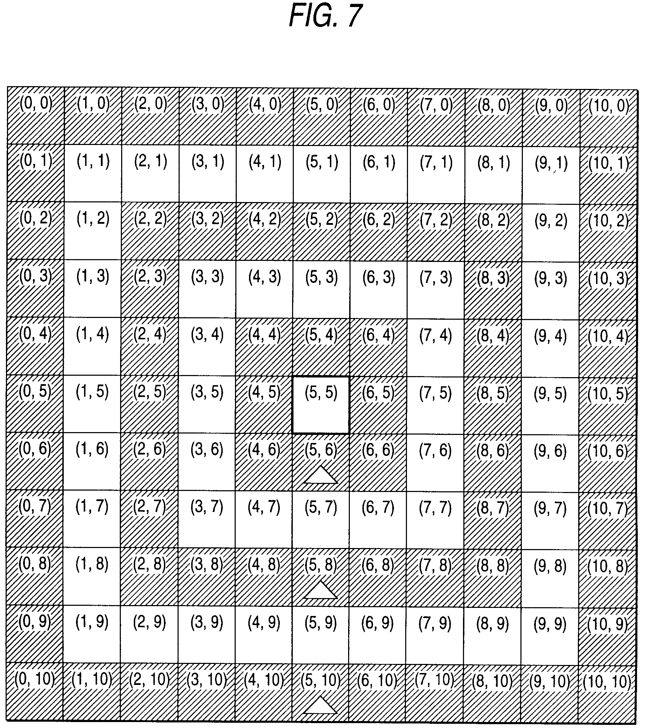

The one-dimensional area setting section 3 sets one-dimensional areas as shown in FIG. 7 for the window area. It draws a two-dimensional figure in response to specification of the user, thereby setting one-dimensional areas at the registration processing time described later and sets the one-dimensional areas with respect to the window area at the recognition processing time described later. A known technique may be applied for automatically preparing such a figure with lines positioned on the feature areas of a specific image or a plurality of two-dimensional figures may be previously stored and such a figure with lines passing through on the feature areas of a specific image may be automatically selected from among the stored two-dimensional figures.

FIG. 7 is an illustration to conceptually show the relationship between the window area and one-dimensional areas. The cells of the window area shown here are in a one-to-one correspondence with the flip-flops in FIG. 6 and the coordinates with the upper-left corner of FIG. 7 as the reference are entered in the cells in FIG. 7.

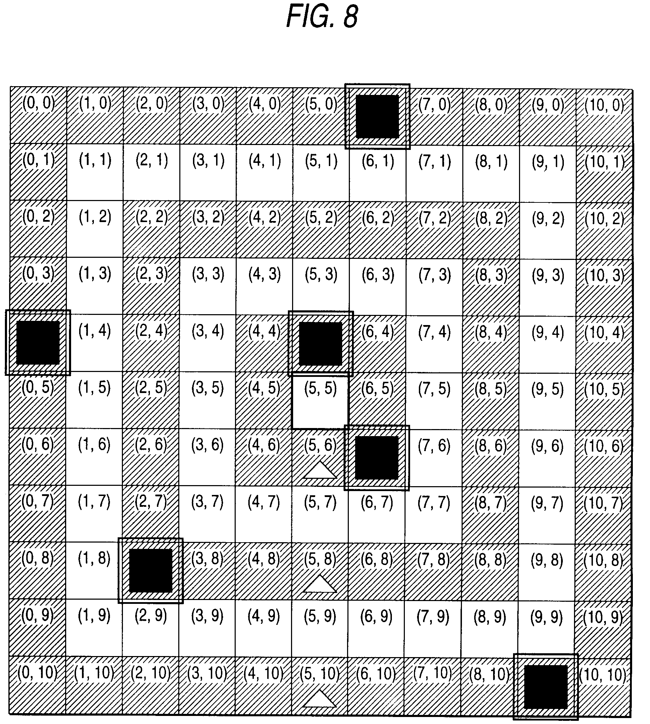

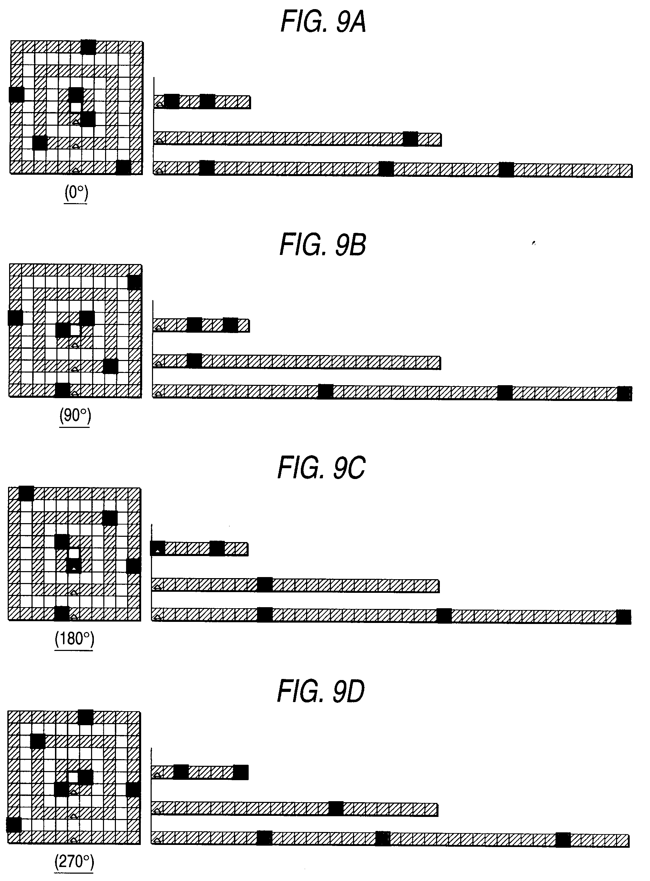

FIG. 8 shows an image where the image shown in FIG. 2A exists in the window area and the window area and one-dimensional areas are set on the image. FIG. 9A-9D show how the one-dimensional areas change as the rotation angle changes from 0 degrees to 90 degrees to 180 degrees to 270 degrees where the rotation angle of the specific image is 0 degrees in the situation shown in FIG. 8. As seen in the figures, in the innermost one-dimensional area, the black pixel positions shift cyclically two pixels at a time each time the rotation angle increases 90 degrees. Likewise, in the intermediate one-dimensional area, the black pixel positions shift cyclically six pixels at a time and in the outermost one-dimensional area, the black pixel positions shift cyclically 10 pixels at a time each time the rotation angle increases 90 degrees. The one-dimensional area setting section 3, the one-dimensional area determination section 4, the one-dimensional area dictionary 5, and the recognition determination section 6 described below are configured so as to perform recognition processing using such nature.

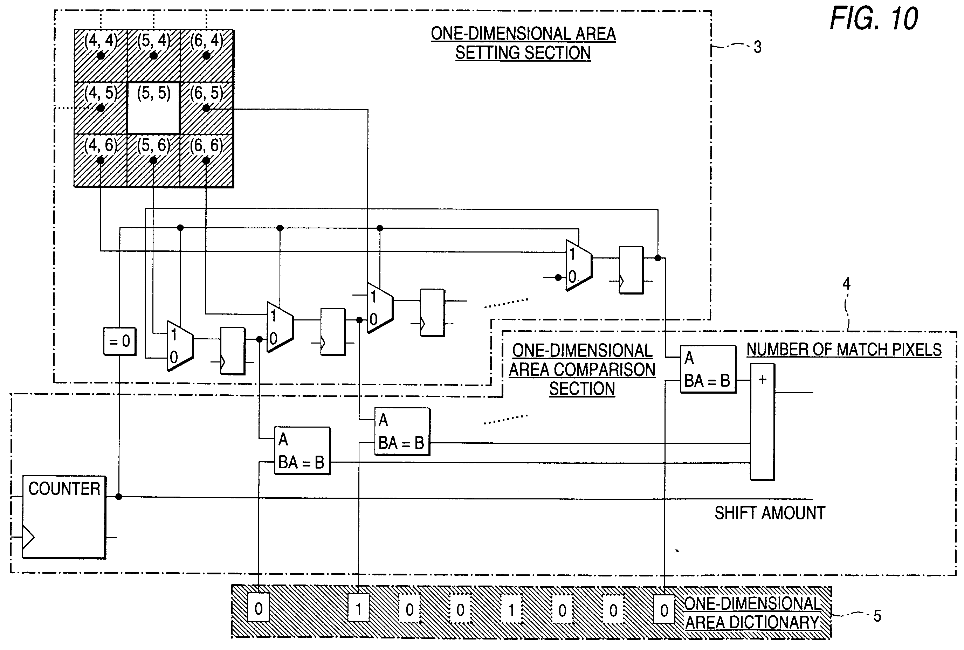

FIG. 10 is an illustration to describe the specific configurations of the one-dimensional area setting section 3, the one-dimensional area determination section 4, and the one-dimensional area dictionary 5; it shows specific examples of the one-dimensional area setting section 3, the one-dimensional area determination section 4, and the one-dimensional area dictionary 5 corresponding to the one-dimensional area hatched in the figure (the inner square in FIG. 7). In FIG. 10, the one-dimensional area setting section 3 comprises pairs of 2-input, 1-output selectors and flip-flops in a one-to-one correspondence with the cells in the corresponding one-dimensional area and generates a one-dimensional data string to be compared with the corresponding reference one-dimensional data string stored in the one-dimensional area dictionary 5 on the flip-flops. However, in FIG. 10, ellipses are entered in place of similar components that can be easily estimated from the shown components to avoid complexity of the figure.

In the one-dimensional area setting section 3 shown in FIG. 10, specifically the contents of each of the cells starting at the reference position in the one-dimensional area are fed into one end of each selector, the input end of the corresponding flip-flop is connected to the output end of each selector, and the other end of the just following selector is connected to the output end of each flip-flop. The other end of the top selector is connected to the output end of the last flip-flop, enabling cyclic shift processing. Further, each selector selectively outputs input from one end only if a counter for counting the shift amount outputs '0' (the rotation angle is 0 degrees); otherwise, each selector selectively outputs input from the other end. That is, if the rotation angle is 0 degrees, the data in the one-dimensional area is loaded and as the rotation angle changes to 90 degrees to 180 degrees to 270 degrees, the black pixel positions are shifted cyclically two pixels at a time. The counter, also a component of the one-dimensional area determination section 4, outputs 0-7 as the shift amount.

In addition to the counter, the one-dimensional area determination section 4 has comparators provided in a one-to-one correspondence with the flip-flops of the one-dimensional area setting section 3 and an adder for outputting the number of outputs indicating "match" (number of match pixels) of the comparison result outputs of the comparators. Each comparator compares the output of the corresponding flip-flop with the corresponding element of the reference one-dimensional data string stored in the one-dimensional area dictionary 5 and outputs the comparison result. If the comparison results of the comparators are all "match" in FIG. 10, the adder outputs 8. The shift amount at the comparison time of the comparators is output from the counter.

The one-dimensional area dictionary 5 is formed of memory, a register, etc., and stores the reference one-dimensional data string used as the comparison reference, as shown in FIG. 10.

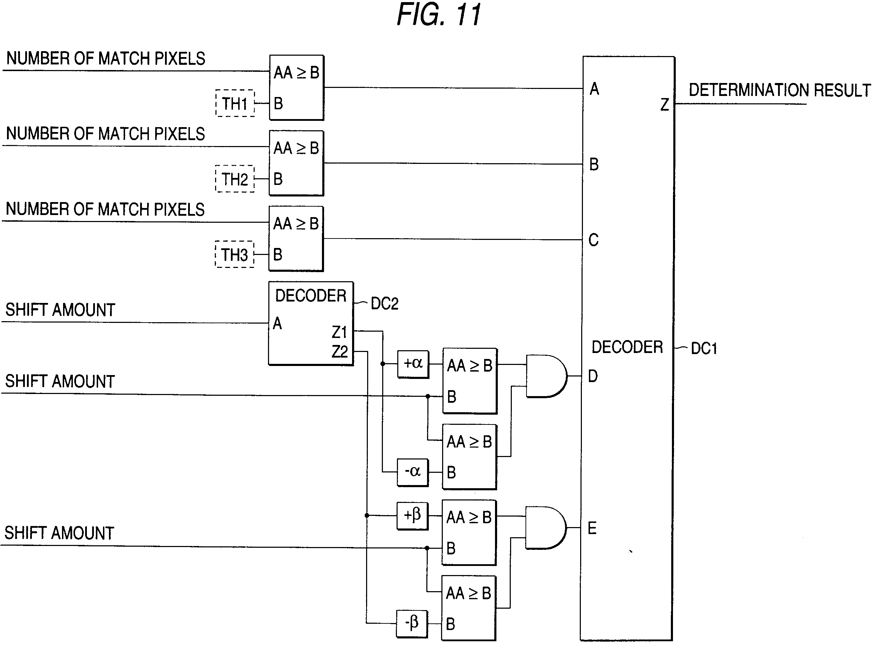

FIG. 11 is a diagram to show a configuration example of the one-dimensional area determination section 6; it shows the configuration based on the window area and one-dimensional areas shown in FIG. 7. In the example shown in FIG. 11, the one-dimensional area determination section 6 compares the number of match pixels supplied for each one-dimensional area with a preset threshold value by a comparator. If the number of match pixels is equal to or greater than the threshold value, the one-dimensional area determination section 6 inputs '1' to a decoder DC1; otherwise, '0' to the decoder DC1. In FIG. 11, TH1 to TH3 are preset threshold values; TH1 is the threshold value corresponding to the innermost one-dimensional area, TH2 is the threshold value corresponding to the intermediate one-dimensional area, and TH3 is the threshold value corresponding to the outermost one-dimensional area.

In the example shown in FIG. 11, the one-dimensional area determination section 6 inputs the shift amount supplied corresponding to the innermost one-dimensional area to a decoder DC2. The decoder DC2, in which the relationship between the shift amount of each one-dimensional area and rotation angle is set, converts the input shift amount into the shift amounts in other two one-dimensional areas and outputs the shift amounts. If the actual shift amount for the intermediate one-dimensional area exists within the range of one output value of the decoder DC2 (shift amount in the intermediate one-dimensional area as the conversion result) ±α, '1' is input to the decoder DC1; otherwise, '0' is input to the decoder DC1. If the actual shift amount for the outermost one-dimensional area exists within the range of the other output value of the decoder DC2 (shift amount in the outermost one-dimensional area as the conversion result) ±β, '1' is input to the decoder DC1; otherwise, '0' is input to the decoder DC1. α and β are values each indicating conversion tolerance. If the input values are all '1,' the decoder DC1 outputs the determination result indicating that the specific image is recognized; otherwise, the decoder DC1 outputs the determination result indicating that the specific image is not recognized.

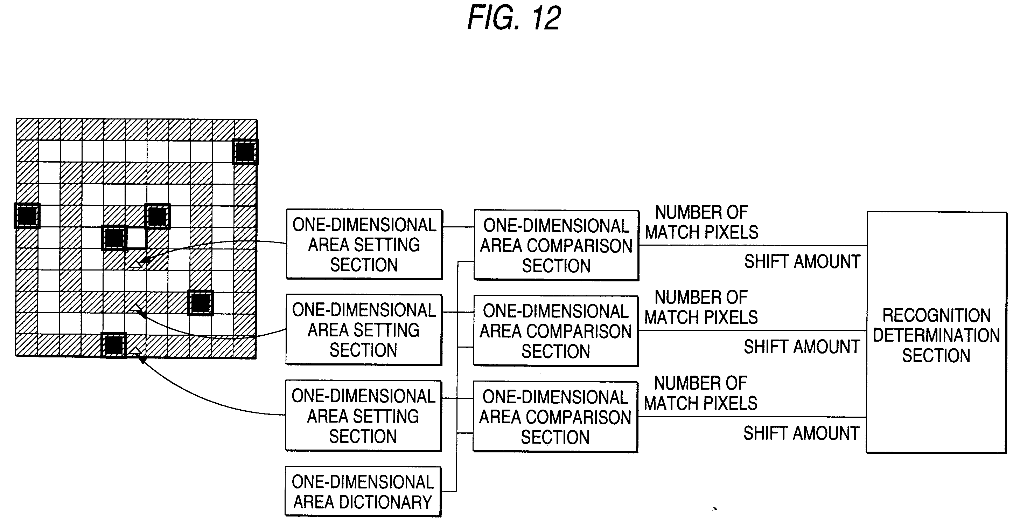

In fact, the one-dimensional area setting section, the one-dimensional area determination section, the one-dimensional area dictionary, and the recognition determination section are placed as shown in FIG. 12. That is, the one-dimensional area setting sections are provided in a one-to-one correspondence with the one-dimensional areas, the one-dimensional area determination sections are provided in a one-to-one correspondence with the one-dimensional area setting sections, one recognition determination section is provided for the one-dimensional area determination sections, and each of the one-dimensional area determination sections reads the corresponding one-dimensional data string from one one-dimensional area dictionary storing the three reference one-dimensional data strings.

### (4) Operation

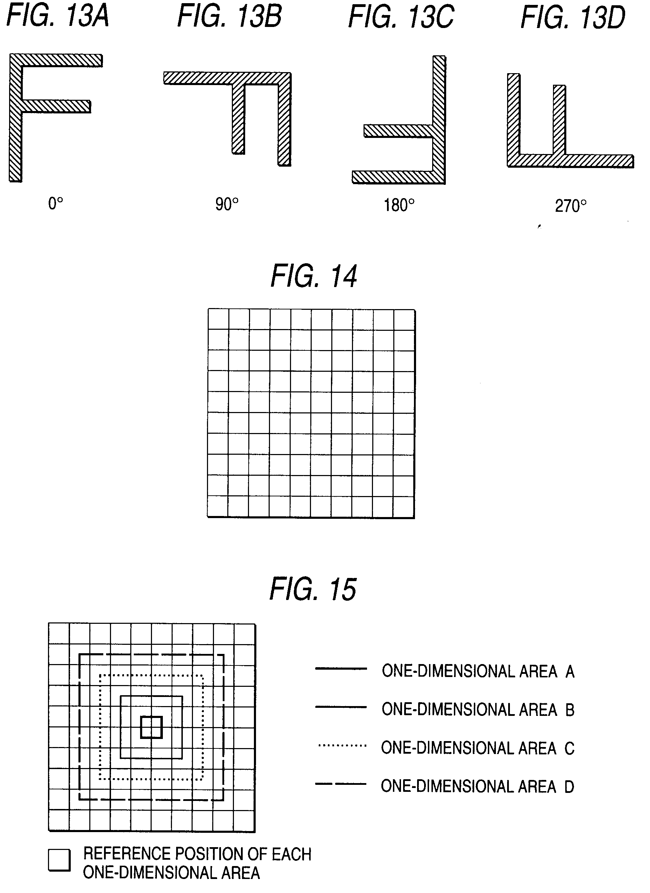

The operation of the described image recognition apparatus will be discussed. Here, assume that the image shown in FIG. 13A is a specific image, that the specific image and the images provided by rotating the specific image in a clockwise direction, shown in FIG. 13B-13D are the images to be recognized, and that a 10 X 10-cell window area shown in FIG. 14 and four one-dimensional areas A, B, C, and D shown in FIG. 15 are adopted. That is, the upper nine line memories and the upper-left 10 X 10 flip-flops in the configuration shown in FIG. 6 are used, the configuration shown in FIG. 10 is provided for each of the four one-dimensional areas A, B, C, and D, and one input channel of the number of match pixels and one input channel of the shift amount are added to the configuration shown in FIG. 11.

Further, here, to clarify the operation of the described image recognition apparatus, the system is applied to a copier in the description.

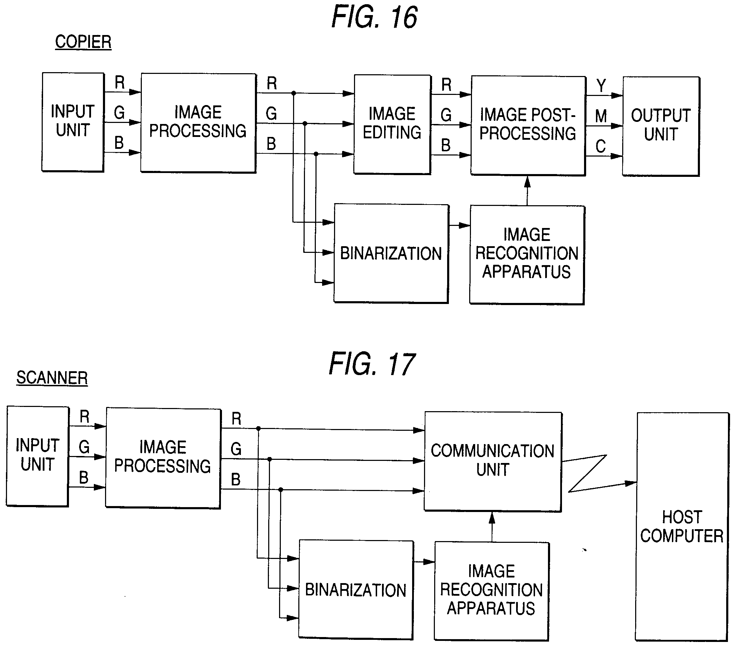

FIG. 16 is a block diagram to show a configuration example of applying the image recognition apparatus to a color copier. As shown here, a general color copier performs preprocessing of shading, filtering, scaling, etc., for color image data (R, G, B) input from an input unit comprising a CCD image sensor and performs edit processing of rotation, cut, deletion, etc., for the preprocessing result, then performs postprocessing of conversion to color space Y, M, C (Y, M, C, K) that can be handled in an output unit, color darkness reproduction adjustment, etc., for generating color image data (Y, M, C or Y, M, C, K) and feeds the color image data to the output unit. In parallel with such processing, the color copier can binarize the image data after undergoing the preprocessing by a binarization section, apply recognition processing of the image recognition apparatus, and perform postprocessing based on the recognition processing result. For example, threshold values such as 180<R<220, 30<G<70, and 30<B<70 are adopted as binarization threshold values.

Of course, the image recognition apparatus can also be applied to a scanner, a handy pattern detector, a printer, a complex machine, etc., as well as a copier.

FIG. 17 is a block diagram to show a configuration example of applying the image recognition apparatus to a scanner. As shown here, a general color scanner performs predetermined processing for color image data (R, G, B) input from an input unit and feeds the processing result into a host computer via a communication unit. At this time, the color scanner can binarize the image data after undergoing the predetermined processing, apply recognition processing of the image recognition apparatus, and perform communication processing based on the recognition processing result.

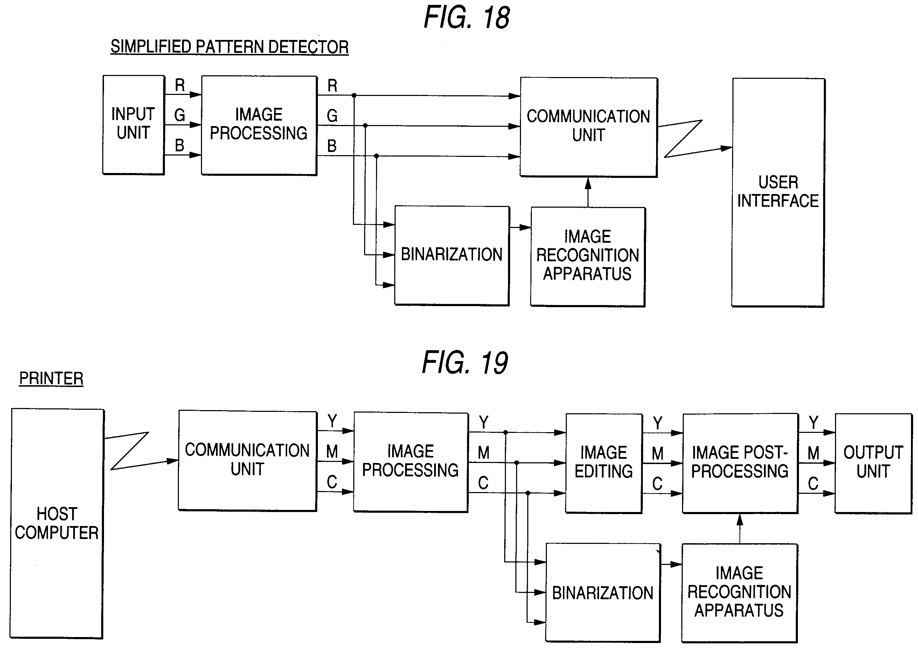

FIG. 18 is a block diagram to show a configuration example of applying the image recognition apparatus to a simplified pattern detector. The simplified pattern detector shown here performs predetermined processing for color image data (R, G, B) input from an input unit and feeds the processing result into a user interface via a communication unit. At this time, the simplified pattern detector can binarize the image data after undergoing the predetermined processing, apply recognition processing of the image recognition apparatus, and perform communication processing based on the recognition processing result.

FIG. 19 is a block diagram to show a configuration example of applying the image recognition apparatus to a printer. As shown here, a general color printer performs predetermined preprocessing for color image data (Y, M, C or Y, M, C, K) input from an input unit and performs edit processing and postprocessing for the processing result for generating color image data (Y, M, C or Y, M, C, K) and feeds the color image data to an output unit. At this time, the color printer can binarize the image data after undergoing the predetermined preprocessing, apply recognition processing of the image recognition apparatus, and perform postprocessing based on the recognition processing result.

### (4-1) Registration processing

First, specific image registration processing will be discussed. Unless otherwise specified, assume that the user operates manipulators provided for a copier incorporating the image recognition apparatus, whereby each process is executed.

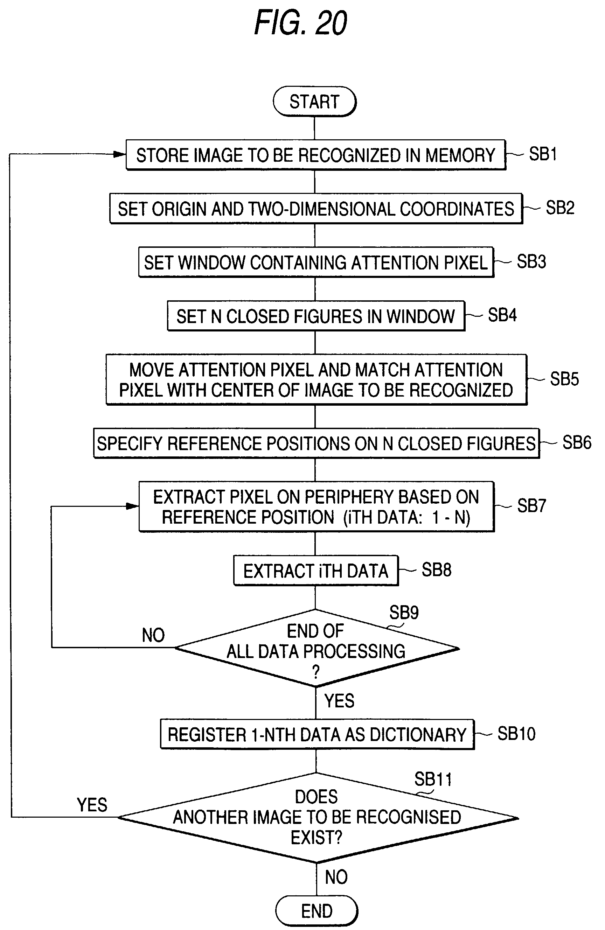

FIG. 20 is a flowchart to show specific image registration processing. As shown here, in the registration processing, first an image containing a specific image is stored in external memory at step SB1. The stored image is an image binarized by a preset method; for example, it is displayed on an external display unit and is visually recognized by the user. Next, an origin and two-dimensional coordinates are set in the image at step SB2, a window area is set at step SB3, and N (in this case, four) closed figures are set in the window area at step SB4.

The center point of the window area is matched with the center point of the specific image at step SB5 and reference positions are specified on the closed figures at step SB6. Then, the image recognition apparatus scans the image on the peripheries of the closed figures in a predetermined direction (in this case, counterclockwise) from the reference positions, extracts all pixel darkness values on the peripheries in order, and generates one-dimensional data strings at steps SB7-SB9, then registers the generated one-dimensional data strings in a one-dimensional area dictionary as reference one-dimensional data strings at step SB10. At this time, the reference positions and the shift amounts corresponding to 90-degree rotation are also stored in the one-dimensional area dictionary corresponding to the reference one-dimensional data strings. The shift amount corresponding to 90-degree rotation is 1 in one-dimensional area A, 3 in one-dimensional area B, 5 in one-dimensional area C, or 7 in one-dimensional area D.

The process at steps SB1-SB10 is repeated as many times as the number of specific images to be recognized (step SB11).

### (4-2) Recognition processing

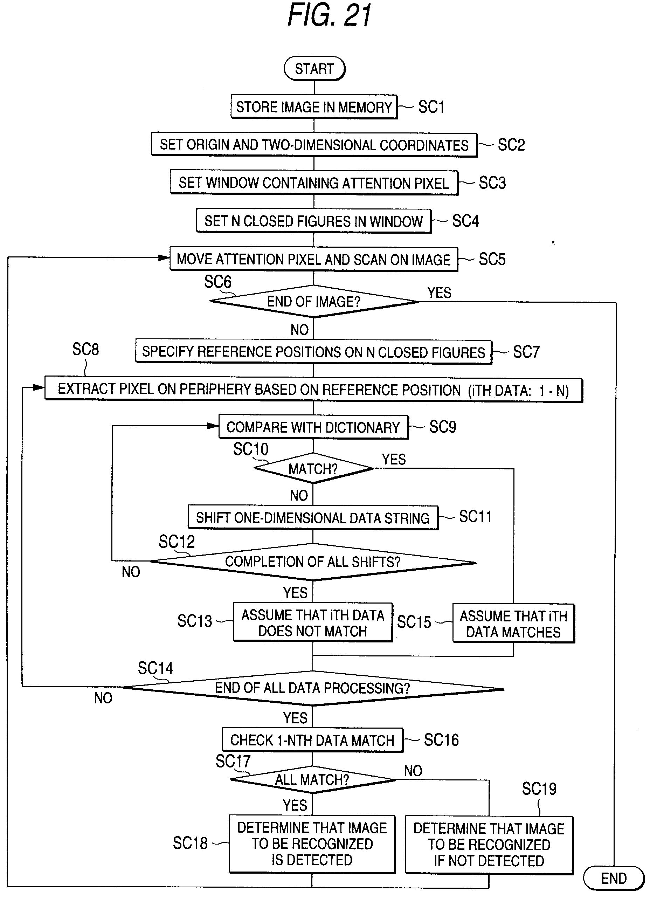

Next, specific image recognition processing will be discussed. FIG. 21 is a flowchart to show specific image recognition processing. As shown here, in the recognition processing, first an input image that can contain the image to be recognized is stored in external memory as specified by the user at step SC1. Then, the image recognition apparatus sets an origin and two-dimensional coordinates on the input image at step SC2. Subsequently, it sets a window area as shown in FIG. 14 at step SC3 and sets a two-dimensional figure as shown in FIG. 15 at step SC4. Reference positions are not set because the reference positions set in the registration processing are used.

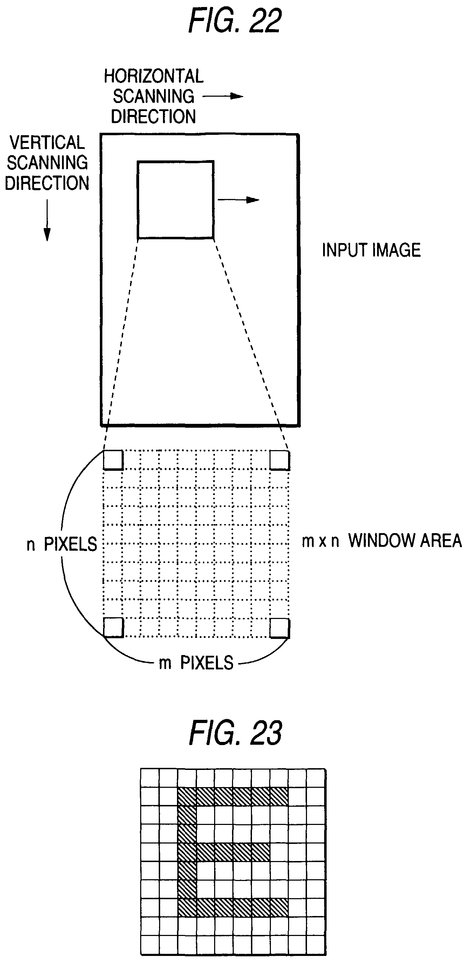

Next, the image recognition apparatus shifts the relative position between the window area and the input image, thereby scanning the input image in the window area and performs detection processing of the image to be recognized for the image extracted with the window area at the scanning time (steps SC5 and SC6). FIG. 22 shows the relationship between the window area and the input image at the scanning time. In the example shown here, the window area is a quadrangle consisting of m pixels in the horizontal scanning direction (line direction) and n pixels in the vertical scanning direction, and scanning in the horizontal scanning direction is repeated each time the scanning start position in the horizontal scanning direction is shifted one pixel in the vertical scanning direction, whereby the entire input image is scanned in the m X n window area. The processing of the window generation section 2 in FIG. 5 corresponds to the scanning in the horizontal scanning direction and the processing of the image input section 1 corresponds to the scanning in the vertical scanning direction.

Next, the detection processing of the image to be recognized for the image extracted with the window area at the scanning time will be discussed. In the description to follow, the image recognition apparatus performs the operation as the main unless otherwise specified.

First, the reference positions stored in the one-dimensional area dictionary 5 (see FIG. 5) are set on the closed figures set at step SC4. Next, all pixel darkness values on the periphery of closed figure are extracted in batch and aligned in a predetermined direction (in this case, clockwise) from the reference position (in this case, the reference position shown in FIG. 15) for generating a one-dimensional data string at steps SC7 and SC8, and the one-dimensional data string is compared bitwise with the corresponding reference one-dimensional data string stored in the one-dimensional area dictionary 5 at step SC9.

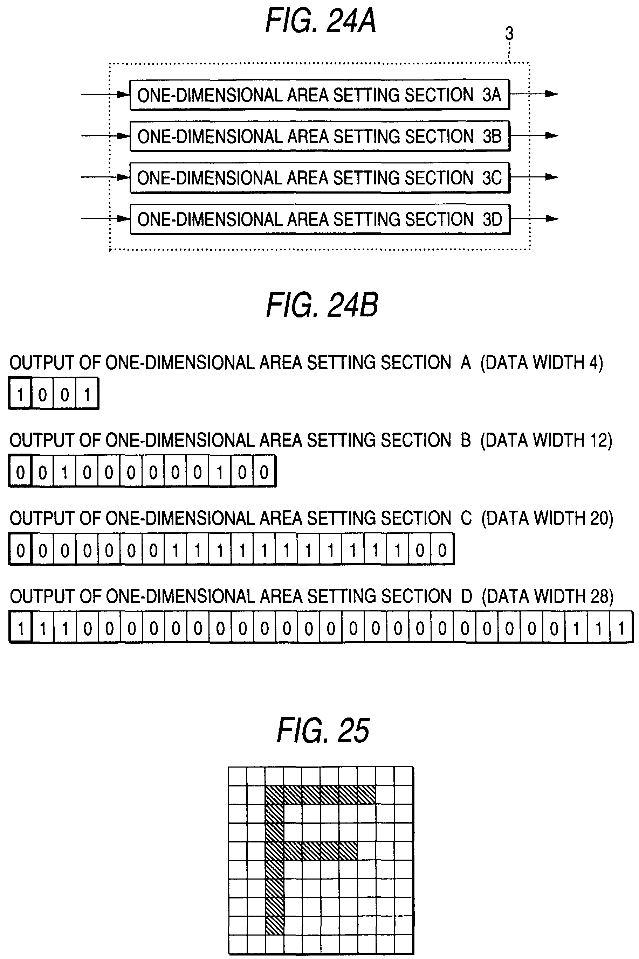

Here, assume that the image in the window area is an image shown in FIG. 23. Since four one-dimensional areas are set on the window area as described above, it is considered that the one-dimensional area setting section 3 is made up of four one-dimensional area setting section channels 3A, 3B, 3C, and 3D as shown in FIG. 24A. If the image in the window area is the image shown in FIG. 23, the one-dimensional area setting section channels 3A, 3B, 3C, and 3D output as shown in FIG. 24B. In this case, the first comparison result at step SC9 (comparison result with one-dimensional area A) means that the one-dimensional data string does not match the reference one-dimensional data string.

At step SC10, whether or not the one-dimensional data string gotten for the input image completely matches the corresponding reference one-dimensional data string is determined. If the image in the window area is the image shown in FIG. 23, the determination result is NO and the one-dimensional data string gotten for the input image is shifted by the shift amount equivalent to 90-degree rotation at step SC11. After this, shifting of the image by the shift amount equivalent to 90-degree rotation and comparison and determination processing are repeated until the determination result at step SC10 or SC12 becomes YES.

If the image in the window area is the image shown in FIG. 23, the determination result at step SC10 does not become YES although all shifts are terminated. Thus, when the determination result at step SC12 becomes YES, control goes to step SC13. If the one-dimensional data string gotten for the input image is shifted the shift amount equivalent to 360-degree rotation in total, the determination result at step SC12 becomes YES; otherwise, NO.

If the image in the window area is the image shown in FIG. 23, it is assumed at step SC13 that the correct pattern is not detected in the one-dimensional area, and whether or not processing for all one-dimensional areas is completed is determined at step SC14.

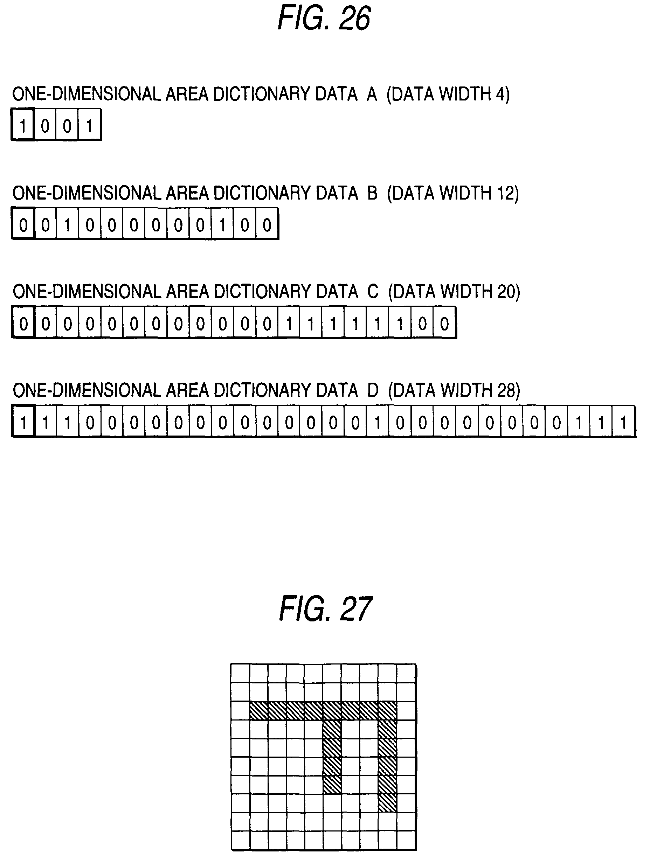

On the other hand, if the image in the window area is an image shown in FIG. 25, the one-dimensional area setting section channels 3A, 3B, 3C, and 3D output as shown in FIG. 26. The first determination result at step SC10 becomes YES and the determination result at step SC10 after the image is shifted at step SC11 becomes NO. Therefore, in this case, it is assumed at step SC15 that the correct pattern exists in the input image only at the first determination time.

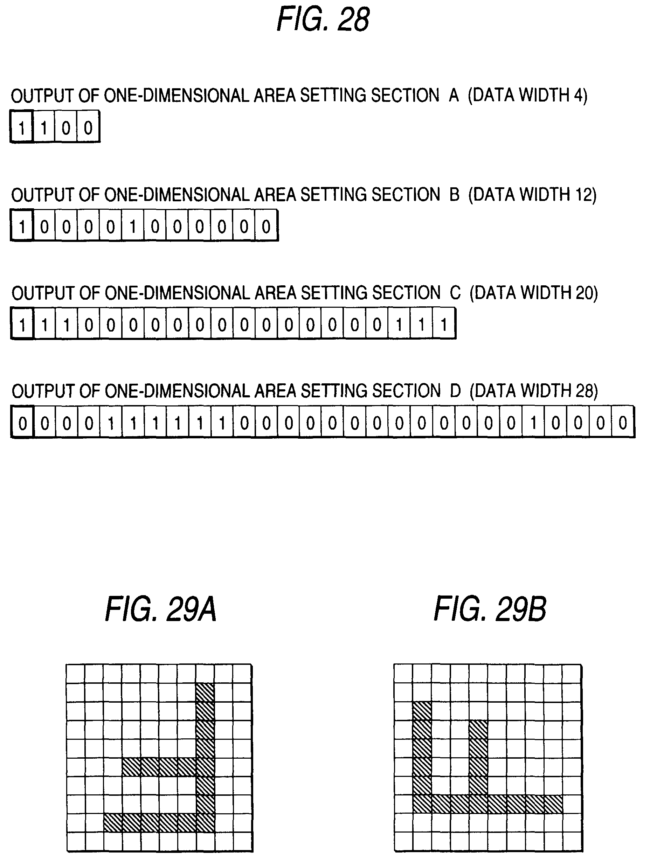

If the image in the window area is an image shown in FIG. 27, the one-dimensional area setting section channels 3A, 3B, 3C, and 3D output as shown in FIG. 28. The second determination result at step SC10 becomes YES and the first, third, and fourth determination results become NO. It is assumed at step SC15 that the correct pattern exists in the input image only at the second determination time. Likewise, if the image in the window area is an image shown in FIG. 29A or 29B, it is assumed at step SC15 that the correct pattern exists in the input image only at the third or fourth determination time.

Step SC14 is a step placed for repeating the above-described processing for the one-dimensional areas A, B, C, and D. The determination result at the step becomes NO as long as there is a one-dimensional area where detection of the image to be recognized is not complete, and control returns to step SC8. If the determination result at step SC14 is YES, control goes to step SC16.

At step SC16, check processing is performed for determining whether or not the image to be recognized is detected based on the number of the one-dimensional areas where the correct pattern is detected and the shift amount at the match time. At step SC17, whether or not the image to be recognized can be detected is determined based on the check processing result. If the determination result at step SC17 is YES, a signal indicating that the specific image is recognized is output to the outside at step SC18; if the determination result is NO, a signal indicating that the specific image is not recognized is output to the outside at step SC19.

After this, control returns to step SC5 and the above-described processing is repeated until the input image has been scanned.

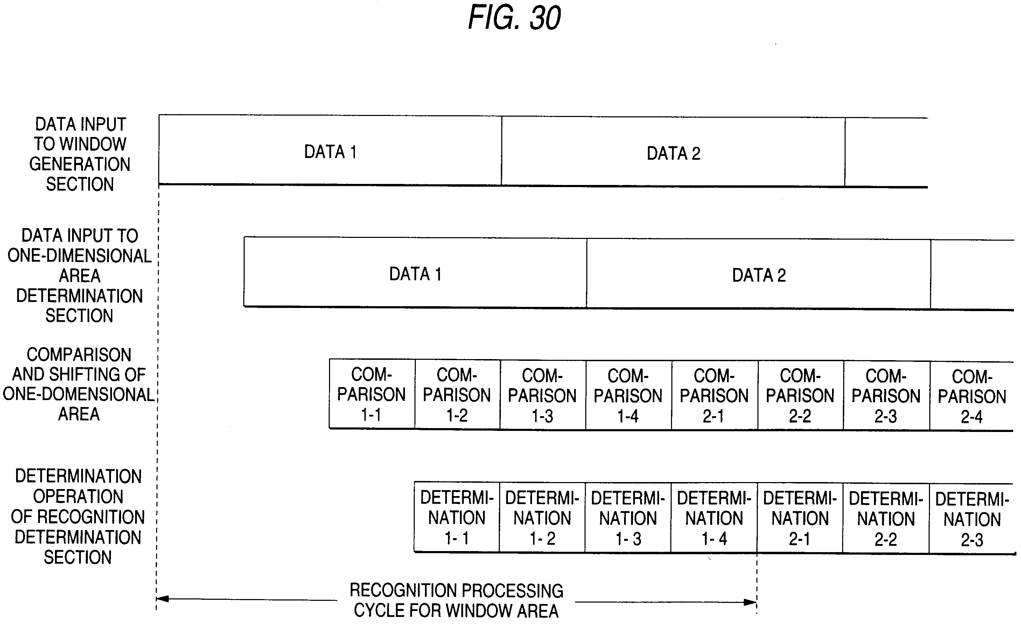

FIG. 30 shows recognition processing cycles for each window area. In the figure, data 1, data 2, ... at the top and second stages represent input data to the window generation section 2 and the one-dimensional area determination section 4, comparison 1-1, comparison 1-2, ... at the third stage represent processing of the one-dimensional area determination section 4 for data 1, comparison 2-1, comparison 2-2, ... at the stage represent processing of the one-dimensional area determination section 4 for data 2, determination 1-1, 1-2, ... at the fourth stage represent processing of the recognition determination section 6 for data 1, and determination 2-1, 2-2, ... at the stage represent processing of the recognition determination section 6 for data 2.

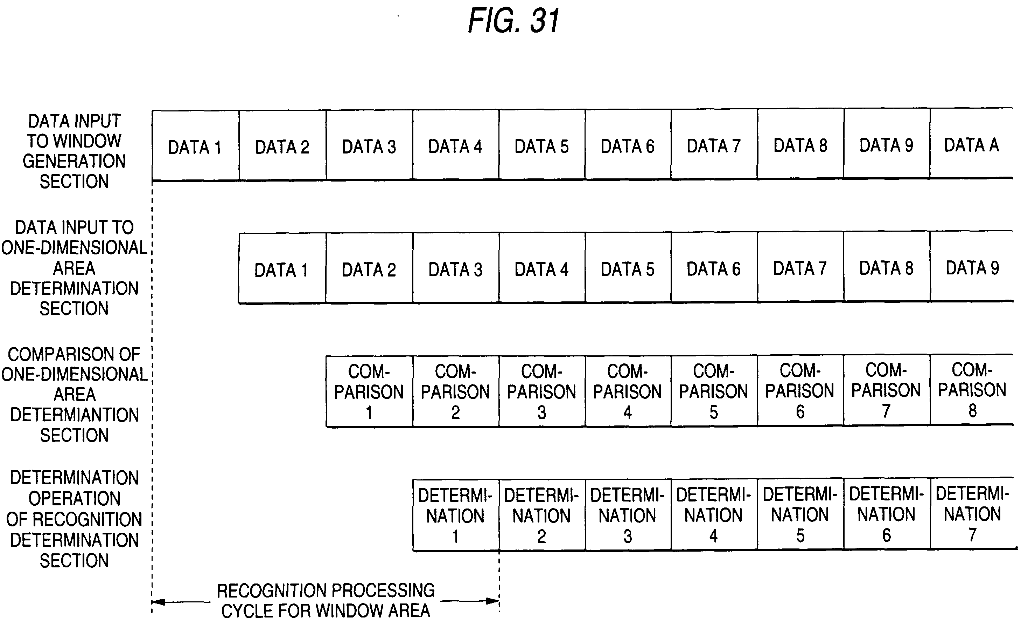

In contrast, FIG. 31 is a chart to show processing cycles applied for performing processing for the one-dimensional areas in parallel. In the figure, comparison 1 at the third stage represents processing of the one-dimensional area determination section 4 for data 1, comparison 2 at the stage represents processing of the one-dimensional area determination section 4 for data 2, and determination 1 at the fourth stage represents processing of the recognition determination section 6 for data 1. As seen in the figures, if a reference one-dimensional data string is found for each one-dimensional area and is stored in the one-dimensional area dictionary 5 and the one-dimensional data strings gotten from an input image are compared with the stored reference one-dimensional data strings in parallel, the whole processing cycles can be shortened.

### (5) Supplemental remarks

In the above-described operation, only one specific image is applied, but more than one specific image may be handled. In this case, reference one-dimensional area data for more than one specific image for each one-dimensional area is stored in the one-dimensional area dictionary 5, whereby more than one specific image and the images provided by rotating the specific images can be recognized.

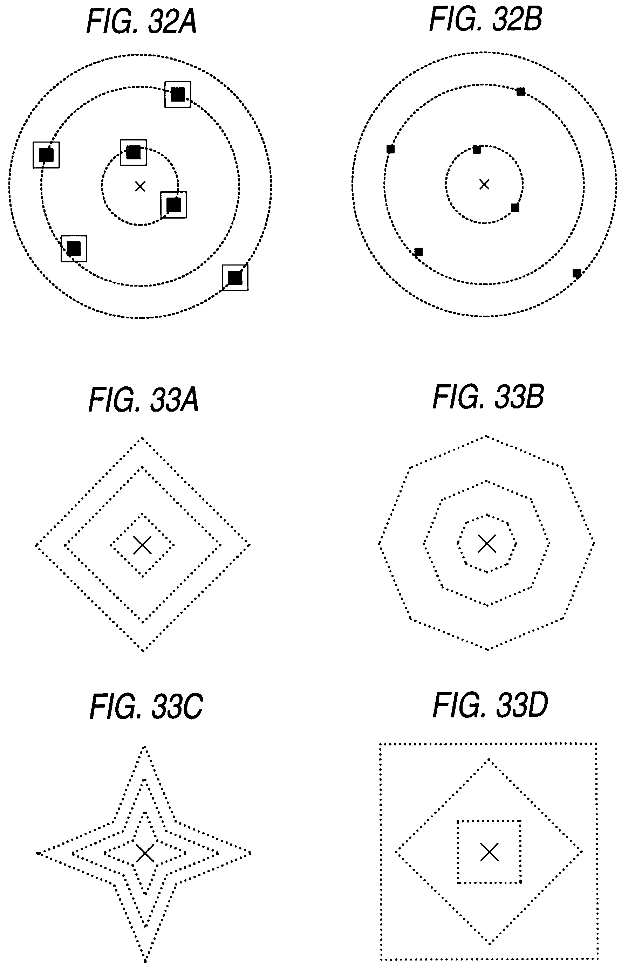

In the described image recognition apparatus, the two-dimensional figures shown in FIG. 2A and 2B are placed on the window area, but two-dimensional figures of concentric circles may be placed as shown in FIG. 32A and 32B or two-dimensional images as shown in FIG. 33A-33D may be placed. That is, any figure may be placed if it is rotated 90 degrees at a time clockwise or counterclockwise and the figure provided by rotating the original figure completely overlaps the original figure.

Particularly, even if the two dimensional figure shown in FIG. 33B is rotated 45 degrees at a time clockwise or counterclockwise, the figure provided by rotating the original figure completely overlaps the original figure, and even if the two dimensional images shown in FIG. 32A and 32B are rotated at any angle clockwise or counterclockwise, the figure provided by rotating the original figure completely overlaps the original figure. Therefore, if the two dimensional image shown in FIG. 33B is adopted, the image provided by rotating the specific image 45 degrees can also be made the image to be recognized, and if the two dimensional images shown in FIG. 32A and 32B are adopted, the image provided by rotating the specific image at any angle can also be made the image to be recognized.

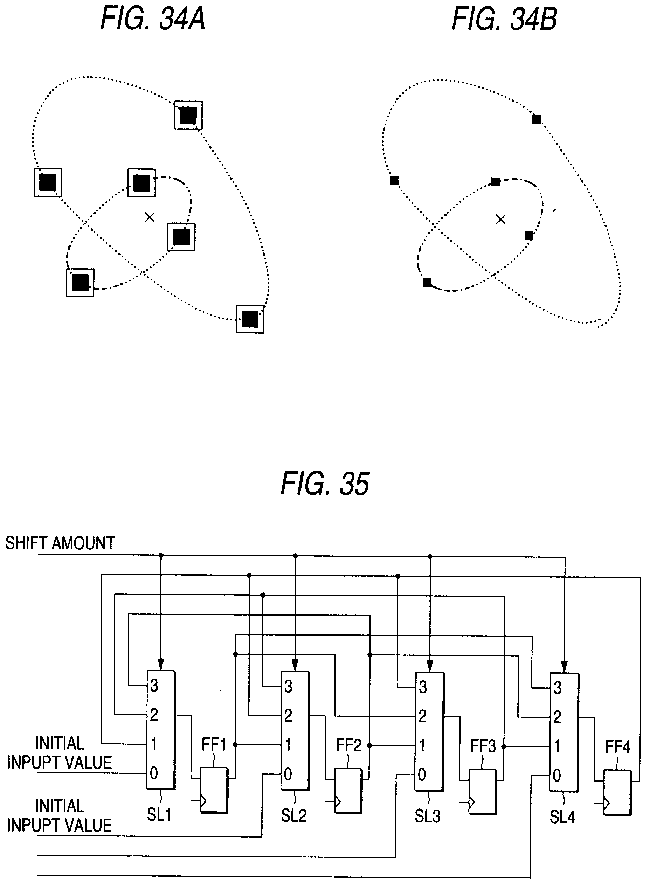

Further, if only a specific image is adopted as the image to be recognized or reference one-dimensional data strings for the images provided by rotating a specific image are previously found, resistance to rotation in two-dimensional figures becomes unnecessary. Therefore, freehand drawn figures as shown in FIG. 34A and 34B can also be adopted as two-dimensional figures. Moreover, in this case, the figures need not be closed figures and may be simple lines or curves.

Cyclic shift of a one-dimensional data string can also be accomplished using a barrel shifter.

FIG. 35 is a diagram to show a configuration example of a barrel shifter; it shows the configuration for cyclically shifting a one-dimensional data string gotten for a one-dimensional area made up of four cells. FF1-FF4 denote flip-flops corresponding to the cells and SL1-SL4 denote selectors provided in a one-to-one correspondence with the flip-flops FF1-FF4 for selecting one from signals input to data input terminals 0-3 in response to the shift amount input to a control terminal and inputting the selected signal to the corresponding flip-flop FF1-FF4. The data input terminal k except the data input terminal 0 of the data input terminals of each of the selectors SL1-SL4 is connected to an output terminal of the flip-flop preceding k stages (where k = 1, 2, 3). Further, the value of the corresponding cell (darkness value) is input to the data input terminal 0 of each of the selectors SL1-SL4 as an initial input value.

The specific operation of the described barrel shifter is as follows:

First, when such a shift amount to select the input signal from the data input terminal 0 is input to the selectors SL1-SL4, the initial input value is stored in the flip-flops FF1-FF4. That is, a one-dimensional data string is set in the flip-flops FF1-FF4. Next, when such a shift amount to select any one of the data input terminals 1-3 is input, each of the selectors SL1-SL4 selects any one of the data input terminals 1-3 and inputs the input signal from the selected data input terminal to the corresponding flip-flop FF1-FF4. That is, cyclic shift responsive to the shift amount can be executed. For example, to cyclically shift a one-dimensional data string by the amount corresponding to two cells, such a shift amount to select the data input terminal 2 may be input to each of the selectors SL1-SL4.

Normally, flip-flops operate in synchronization with an input clock signal and require two clocks for shifting a one-dimensional data string by the amount corresponding to two cells. However, as seen from the description, any shift operation can be executed at one clock with the barrel shifter. Here, an example in which a one-dimensional area consisting of four cells can be handled is given. However, n flip-flops and n selectors are provided, each selector is provided with n+1 data input terminals, and output terminals of the flip-flops are connected properly to the data input terminals, whereby a one-dimensional area consisting of n cells can also be handled.

### (6) Modified embodiments

### (6-1) First modified embodiment

Next, a first modified embodiment of the image recognition apparatus of the invention will be discussed.

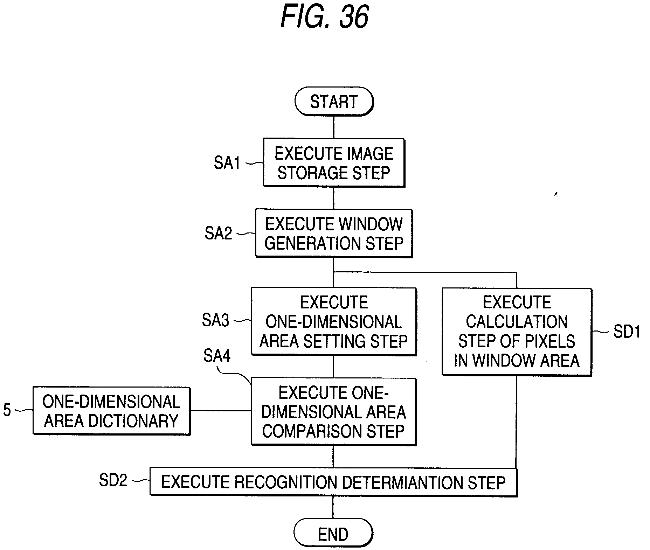

FIG. 36 is a flowchart to show image recognition processing realized by the first modified embodiment of the image recognition apparatus. The image recognition processing shown here differs from that shown in FIG. 1 in that step SD1 for calculating ON pixels (for example, black pixels) in a window area in parallel with steps SA3 and SA4 is provided and that step SD2 for performing recognition determination based on the calculation result at step SD1 and the result at step SA4 is provided in place of step SA5.

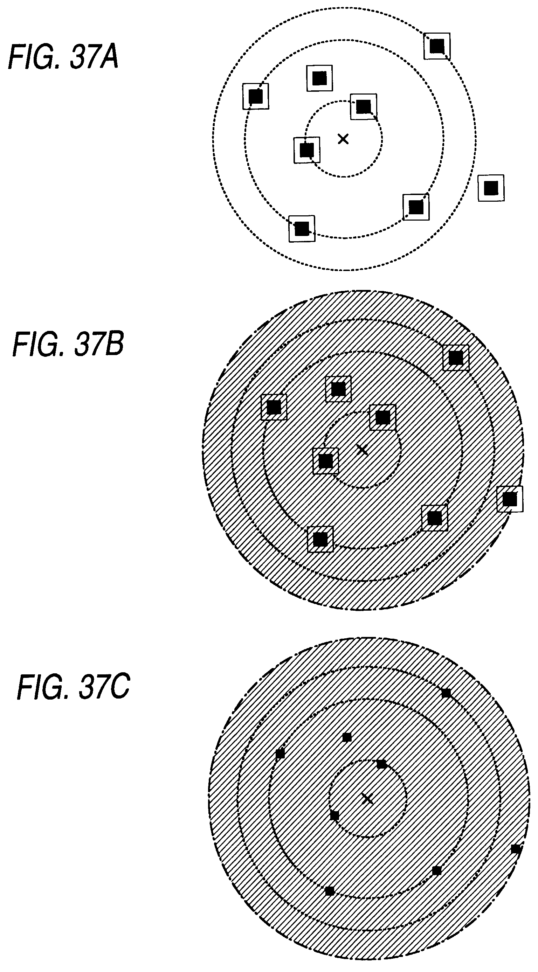

That is, the number of ON pixels in a window area hatched in FIG. 37B and 37C is found for a specific image as shown in FIG. 37A, and similar processing is performed for the image provided by scanning an input image in the window area at the recognition processing time. If the number of ON pixels found for the specific image does not match that found for the provided image or the difference therebetween is outside a predetermined range, it is determined that the image is not recognized independently of the one-dimensional data string comparison result. Of course, the number of OFF pixels rather than ON pixels may be calculated for determining whether or not the image is recognized.

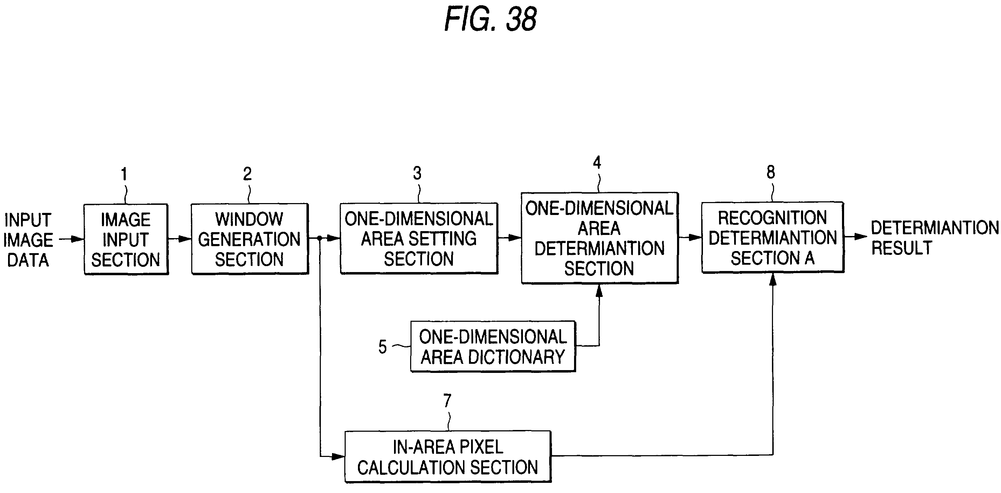

The configuration of the first modified embodiment will be discussed. FIG. 38 is a block diagram to show the configuration of the first modified embodiment. The configuration shown here differs from that shown in FIG. 5 in that an in-area pixel calculation section 7 is provided and that a recognition determination section A8 for determining whether or not a specific image is recognized based on the calculation result of the in-area pixel calculation section 7 and the comparison result of the one-dimensional area determination section 4 is provided in place of the recognition determination section 6. The in-area pixel calculation section 7 calculates the number of ON pixels contained in the image data extracted in the window generation section 2 and outputs the calculation result. It has any configuration; for example, the image in the window area may be scanned one pixel at a time for finding the number of ON pixels or a different configuration may be adopted.

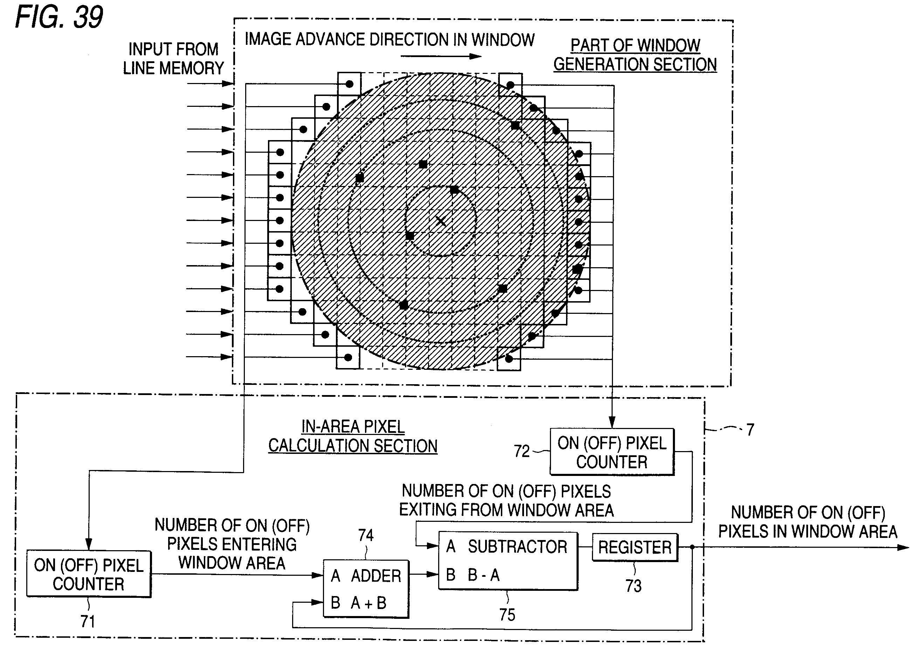

The different configuration of the in-area pixel calculation section 7 will be discussed. FIG. 39 is an illustration to describe a configuration example of the in-area pixel calculation section 7. The in-area pixel calculation section 7 of the configuration shown here counts the number of ON pixels entering the window area and that exiting therefrom at the input image scanning time with the window area and calculates the number of ON pixels existing in the window area.

FIG. 39 shows a part of the window generation section 2. Here, the image data input from the line memories of the image input section 1 advances from left to right in FIG. 39 on the flip-flops making up the window generation section 2. Therefore, the pixel darkness value contained even temporarily in the hatched window area enters the window area through any of the 13 flip-flops existing at the left end of the window area and exits from the window area through any of the 13 flip-flops existing at the right end of the window area. It is obvious that the number of ON pixels in the window area in the initial state is 0. Thus, if the number of ON pixels in the window area in the initial state is set to 0 and the contents of the 13 flip-flops existing at the left end of the window area and the contents of the 13 flip-flops existing at the right end are monitored, the number of ON pixels in the window area can be found.

Based on the principle, the in-area pixel calculation section 7 comprises an ON pixel counter 71 for counting the number of ON pixels existing on the 13 flip-flops existing at the left end, an ON pixel counter 72 for counting the number of ON pixels existing on the 13 flip-flops existing at the right end, a register 73 for holding the current number of ON pixels in the window area and outputting the number of ON pixels to the recognition determination section A 8, an adder 74 for adding the number of ON pixels counted in the ON pixel counter 71 to the current number of ON pixels, and a subtractor 75 for subtracting the number of ON pixels counted in the ON pixel counter 72 from the addition result of the adder 74 and stores the subtraction result of the subtractor 75 in the register 73 as the current number of ON pixels at the next move timing of the window area. Resultantly, the output value from the register 73 always indicates the number of ON pixels in the window area. In FIG. 39, addition is executed before subtraction, but subtraction may be executed before addition, needless to say.

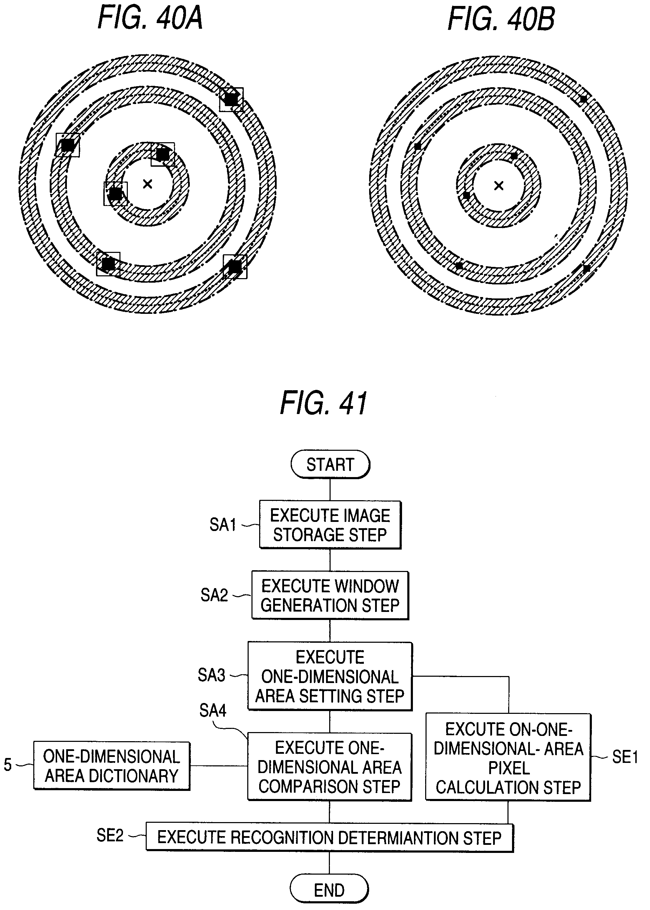

Scanning may be executed in the areas hatched in FIG. 40A and 40B for finding the number of cells corresponding to feature areas and similar processing may be performed for the image provided by scanning an input image in the window area at the recognition processing time. If the number of cells corresponding to feature areas does not match that found for the provided image or the difference therebetween is outside a predetermined range, it may be determined that the image is not recognized independently of the one-dimensional data string comparison result. In this case, as compared with the case shown in FIG. 37B and 37C, the scanned area when the number of cells corresponding to feature areas is found can be narrowed and the load can be taken off the image recognition apparatus.

### (6-2) Second modified embodiment

Next, a second modified embodiment of the image recognition apparatus of the invention will be discussed.

FIG. 41 is a flowchart to show image recognition processing realized by the second modified embodiment of the image recognition apparatus. The image recognition processing shown here differs from that shown in FIG. 36 in that step SE1 for calculating ON pixels on a one-dimensional area in parallel with step SA4 is provided in place of step SD1 and that step SE2 for performing recognition determination based on the calculation result at step SE1 and the result at step SA4 is provided in place of step SD2. That is, in the second modified embodiment, the number of ON pixels in the entire window area is not found and the number of ON pixels only on a one-dimensional area is found, whereby image recognition accuracy is improved.

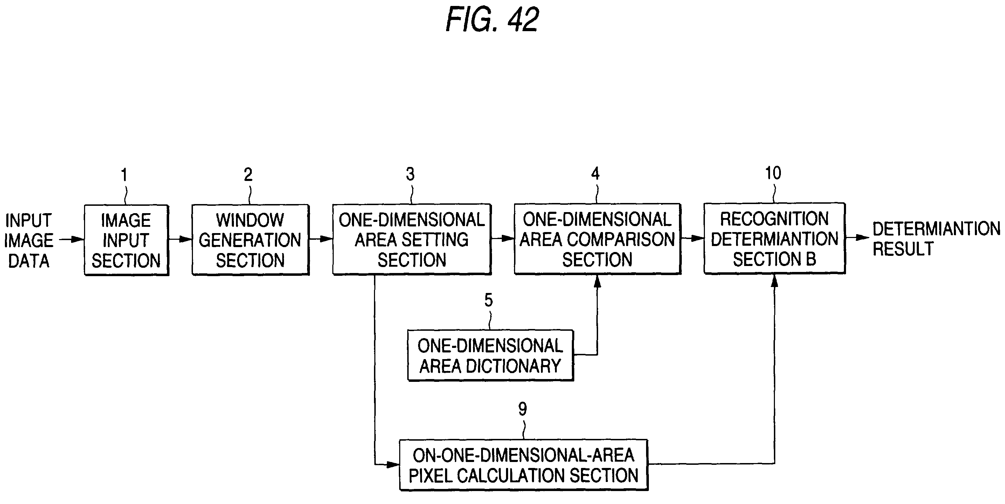

FIG. 42 is a block diagram to show the configuration of the second modified embodiment. The configuration shown here differs from that shown in FIG. 38 in that an on-one-dimensional-area pixel calculation section 9 and a recognition determination section B 10 are provided in place of the in-area pixel calculation section 7 and the recognition determination section A 8. The on-one-dimensional-area pixel calculation section 9 calculates the number of ON pixels on each one-dimensional area set on the window area and outputs the value responsive to the calculation result. The recognition determination section B 10 determines whether or not image is recognized based on the output of the on-one-dimensional-area pixel calculation section 9 and the comparison result of the one-dimensional area determination section 4.

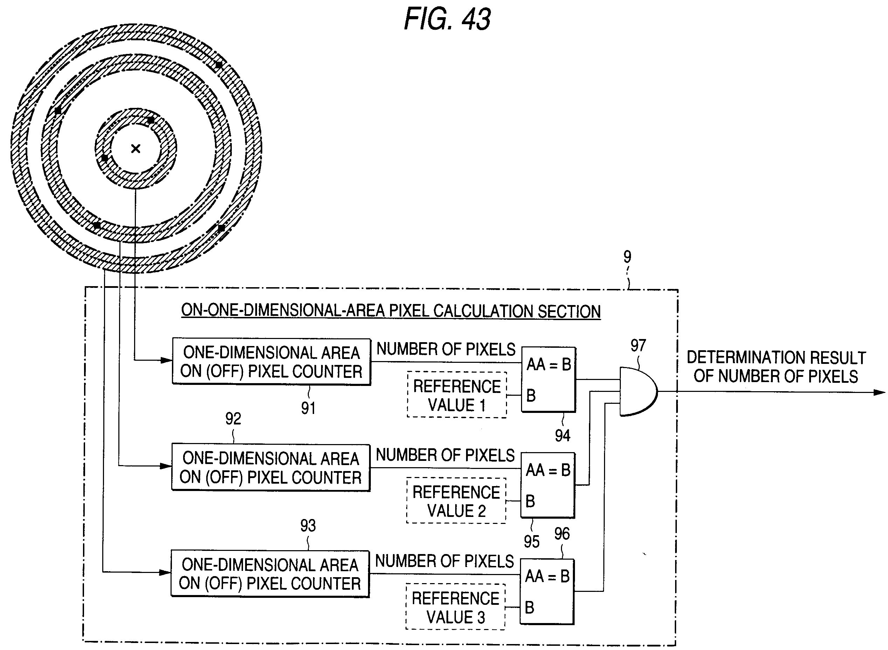

FIG. 43 is an illustration to describe a configuration example of the on-one-dimensional-area pixel calculation section 9; it shows a configuration example for handling three one-dimensional areas. In the figure, numerals 91-93 are one-dimensional area ON pixel counters each for counting the number of ON pixels on the corresponding one-dimensional area. Numerals 94-96 are comparators provided in a one-to-one correspondence with the one-dimensional area ON pixel counters. Each comparator compares the number of ON pixels input from the corresponding one-dimensional area ON pixel counter with a preset reference value 1-3. If the number of ON pixels and the reference value match, the comparator outputs '1,' otherwise '0.' For example, for the specific image and two-dimensional figure shown in FIG. 32A and 32B, the reference values 1-3 become 2, 3, and 1 respectively. Numeral 97 is an AND gate for ANDing the comparison results of the comparators 94-96 and outputting the operation result as the determination result of the number of ON pixels. That is, the AND gate 97 outputs '1' only if the numbers of ON pixels on the one-dimensional areas match the preset reference values.

### (6-3) Third modified embodiment

Next, a third modified embodiment of the image recognition apparatus of the invention will be discussed.

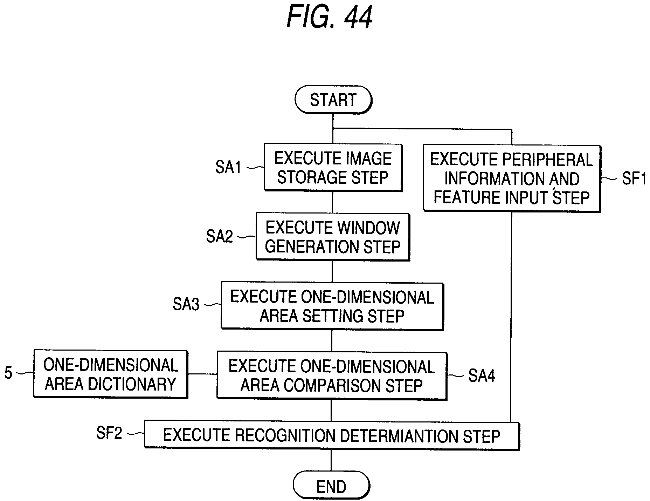

FIG. 44 is a flowchart to show image recognition processing realized by the third modified embodiment of the image recognition apparatus. The image recognition processing shown here differs from that shown in FIG. 1 in that step SF1 for inputting relevant information such as peripheral information and feature of a specific image in parallel with steps SA1-SA4 is provided and that step SF2 for performing recognition determination based on the input contents at step SF1 and the result at step SA4 is provided in place of step SA5.

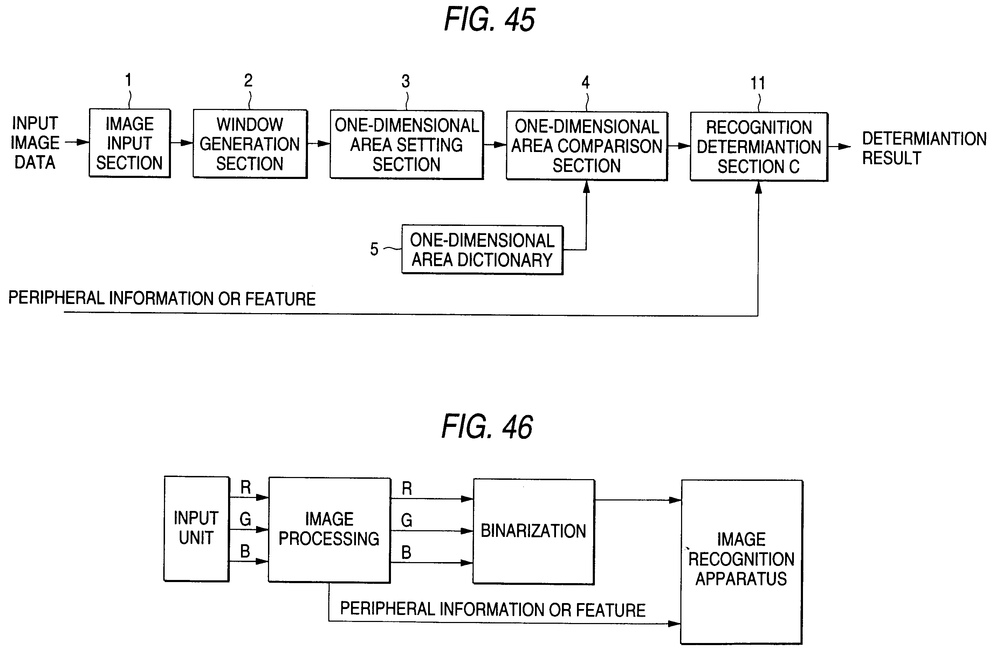

FIG. 45 is a block diagram to show the configuration of the third modified embodiment. The configuration shown here differs from that shown in FIG. 5 in that a recognition determination section C 11 is provided in place of the recognition determination section 6. The recognition determination section C 11 determines whether or not a specific image is recognized based on the comparison result of the one-dimensional area determination section 4 and the relevant information to the specific image. The relevant information to the specific image mentioned here includes background information, etc., and is extracted at the preprocessing stage before binarization, as shown in FIG. 46.

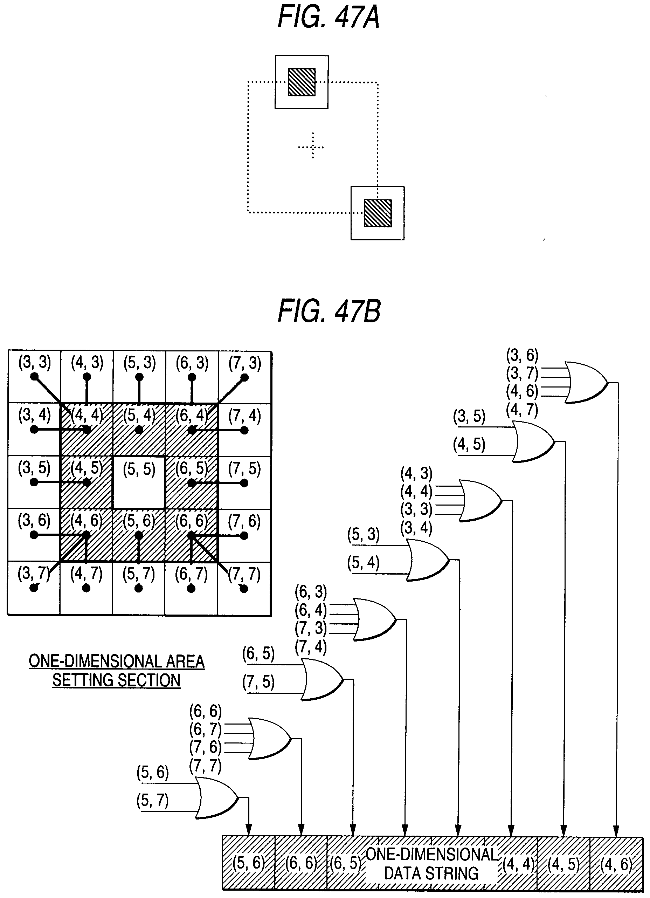

Background information, etc., can also be considered in the process of generating a one-dimensional data string for decreasing erroneous recognition caused by a slight position shift, etc., of an input image. For example, if the image shown in FIG. 47A is a specific image and the one-dimensional area shown in FIG. 47B is provided, it is desired that the feature areas enter cells (5, 4) and (6, 6), but it is also possible that the feature areas do not enter cells (5, 4) and (6, 6). For example, the feature areas can enter cells (6, 7), (7, 6), and (7, 7) rather than (6, 6). FIG. 47B shows a configuration considering such a case, wherein when a one-dimensional data string is generated, peripheral cells are also considered for determining values of cells for comparison. How to consider peripheral cells is arbitrary and should be designed appropriately in response to resolution, etc.

### (7) General supplemental remarks

The methods related to the above-described embodiment and modified embodiments are realized as software described in a program language. The systems related to the above-described embodiment and modified embodiments can be realized by a computer system and software.

As described above, according to the invention, a specific image can be recognized easily and at high speed from an input image. Moreover, not only a specific image, but also the images provided by rotating the specific image can be recognized at high speed with high accuracy.

The entire disclosure of each and every foreign patent application from which the benefit of foreign priority has been claimed in the present application is incorporated herein by reference, as if fully set forth.

While only certain embodiments of the invention have been specifically desired herein, it will apparent that numerous modifications may be made thereto without departing from the spirit and scope of the invention.

## Claims

1. An image recognition method of recognizing a plurality of images from an input image, the plurality of images to be recognized including at least one of a specific image and images provided by rotating the specific image, the method comprising the steps of:
preparing a reference one-dimensional data string having a pixel value for each image to be recognized, said reference one-dimensional data string being provided by arranging said pixel values on a predetermined liner-shaped figure on a window area in an order, said window area having a size including the specific image and being structured by cells;
first setting said window area on the input image;
second setting said figure on said window area set on the input image;
comparing a one-dimensional data string having a pixel value for the input image with said reference one-dimensional data string, said one-dimensional data string being provided by arranging said pixel values on said figure on said window area in the order; and
determining whether or not the specific image exists based on the comparison result at said comparing step.

2. The image recognition method as claimed in claim 1, wherein said figure in the image to be recognized and said figure in the input image have a reference position thereon, respectively, and
each of said reference one-dimensional data string and said one-dimensional data string is provided by arranging said pixel values from said reference position in the order.

3. The image recognition method as claimed in claim 2, wherein said figure completely overlaps with a rotation figure provided by rotating said figure,
said figure in the input image is set on said window area so that the rotation center of said figure matches the rotation center of the specific figure, and
the comparison at said comparing step is made while said one-dimensional data string and the reference one-dimensional data string are shifted relatively and cyclically.

4. The image recognition method as claimed in claim 3, wherein a plurality of the figures are provided, and
said determining step determines whether or not the specific image exists based on the relative relationship between shift amounts from each reference position when the comparison result at said comparing step for each figure satisfies a predetermined condition.

5. The image recognition method as claimed in claim 3, wherein a plurality of the figures are provided,
said comparing step compares the one-dimensional data string with the reference one-dimensional data string corresponding thereto, while cyclically shifting the one-dimensional data string corresponding to any one of the figures, relatively and cyclically shifts each of the one-dimensional data strings corresponding to the figures other than that figure and each of the reference one-dimensional data strings based on the shift amount from the reference position when the comparison result satisfies a predetermined condition, and makes a comparison therebetween, and wherein
said determining step determines whether or not the specific image exists based on the comparison results at said comparing step.

6. The image recognition method as claimed in claim 1, further comprising the steps of:
finding the number of pixels each having a predetermined value in a preset area in the window area set at said first setting step; and
another comparing the number of pixels with a predetermined number in the specific image, wherein
said determining step determines whether or not the specific image exists based on the comparison results at said comparing and said another comparing steps.

7. The image recognition method as claimed in claim 6, wherein the preset area is an area on the liner-shaped figure.

8. The image recognition method as claimed in claim 1, further comprising the step of:
inputting relevant information to the specific image, wherein
said determining step determines whether or not the specific image exists by considering the relevant information input.

9. The image recognition method as claimed in claim 1, further comprising the step of:
correcting a value of a pixel positioned on the figure set at said second setting step based on values of peripheral pixels of said pixels, wherein
said comparing step compares a one-dimensional data string comprising the values of the pixels corrected at said correcting step arranged in the order with the reference one-dimensional data string.

10. The image recognition method as claimed in claim 1, wherein said specific image and said input image are binarized images.

11. An image recognition apparatus of recognizing a plurality of images from an input image, the plurality of images to be recognized including at least one of a specific image and images provided by rotating the specific image, the apparatus comprising:
image input means for inputting the input image;
storage means for storing a reference one-dimensional data string having a pixel value for each image to be recognized, said reference one-dimensional data string being provided by arranging said pixel values on a predetermined liner-shaped figure on a window area in an order, said window area having a size including the specific image and being structured by cells;
window setting means for setting the window area on the input image input through said image input means;
figure setting means for setting the figure on the window area set by said window setting means;
comparison means for comparing a one-dimensional data string having a pixel value for the input image with the reference one-dimensional data string, said one-dimensional data string being provided by arranging said pixel values on said figure on said window area in the order; and
recognition determination means for determining whether or not the specific image exists based on the comparison result of said comparison means.

12. The image recognition apparatus as claimed in claim 11, wherein said figure in the image to be recognized and said figure in the input image have a reference position thereon, respectively, and
each of said reference one-dimensional data string and said one-dimensional data string is provided by arranging said pixel values from said reference position in the order.

13. The image recognition apparatus as claimed in claim 12, wherein said figure completely overlaps with a rotation figure provided by rotating said figure,
said figure in the input image is set on said window area so that the rotation center of said figure matches the rotation center of the specific figure, and
the comparing means compares the one-dimensional data string with the reference one-dimensional data string while cyclically shifting the one-dimensional data string.

14. The image recognition apparatus as claimed in claim 13, wherein a plurality of the figures are provided,
said comparison means compares the one-dimensional data storing with the reference one-dimensional data string separately for each of the figures, and
if each comparison result of said comparison means satisfies a predetermined condition, said recognition determination means determines whether or not the specific image exists based on the relative relationship between shift amounts when the comparison results are provided.

15. The image recognition apparatus as claimed in claim 13, wherein a plurality of the figures are provided,
on the basis of the shift amount from the reference position when the comparison result for any one of the figures satisfies a predetermined condition, said comparison means cyclically shifts each one-dimensional data string corresponding to another figure.

16. The image recognition apparatus as claimed in claim 15, wherein said comparison means comprises a barrel shifter for cyclically shifting data string at a time by specified shift amount and gives the shift amount from the reference position when the comparison result satisfies the predetermined condition to the barrel shifter for cyclically shifting each one-dimensional data string at a time.

17. The image recognition apparatus as claimed in claim 11, wherein said storage means stores a plurality of reference one-dimensional data strings corresponding to each of a plurality of the specific images, and
said comparison means selects any one of the reference one-dimensional data strings stored in said storage means and compares the selected reference one-dimensional data string with the one-dimensional data string.

18. The image recognition apparatus as claimed in claim 11, wherein said storage means stores a plurality of reference one-dimensional data strings corresponding to each of a plurality of the specific images,
said comparison means compares the one-dimensional data string with the plurality of the reference one-dimensional data strings, and
said recognition determination means determines whether or not the specific images exist in the input image based on the comparison results of said comparison means.

19. The image recognition apparatus as claimed in claim 11, further including:
number-of-pixels calculation means for finding the number of pixels each having a predetermined value in a preset area in the window area set by said window area setting means; and
number-of-pixels comparison means for comparing the number of pixels found by said number-of-pixels calculation means with a predetermined number, wherein
said recognition determination means determines whether or not the specific image exists based on the comparison results of said comparison means and said number-of-pixels comparison means.

20. The image recognition apparatus as claimed in claim 19, wherein the preset area is an area on the figure.

21. The image recognition apparatus as claimed in claim 11, wherein said recognition determination means determines whether or not the specific image exists by considering the relevant information to the specific image.

22. The image recognition apparatus as claimed in claim 11, further including correction means for correcting the pixel values on the figure set by said figure setting means based on values of peripheral pixels each of said pixels, wherein
said comparison means compares a one-dimensional data string comprising the pixel values corrected by said correction means and arranged in the order with the reference one-dimensional data string.

23. The image recognition apparatus as claimed in claim 11, wherein the figure is a closed figure.

24. The image recognition apparatus as claimed in claim 11, wherein the window area is rectangular.

25. The image recognition apparatus as claimed in claim 11, wherein the window area is circular.

26. A recording medium recording a program of recognizing a plurality of images from an input image, the plurality of images to be recognized including at least one of a specific image and images provided by rotating the specific image, said program comprising the steps of:
loading a reference one-dimensional data string having a pixel value for each image to be recognized, said reference one-dimensional data string being provided by arranging said pixel values on a predetermined liner-shaped figure on a window area in an order, said window area having a size including the specific image and being structured by cells;
first setting the window area on the input image;
second setting the figure on the window area set on the input image;
comparing a one-dimensional data string having a pixel value for the input image with the reference one-dimensional data string, said one-dimensional data string being provided by arranging said pixel values on said figure on said window area in the order; and
determining whether or not the specific image exists based on the comparison result at said comparing step.
